(19) Europäisches Patentamt
European Patent Office
Office européen des brevets

(11) EP 4 803 188 A1

# (12) EUROPEAN PATENT APPLICATION
published in accordance with Art. 153(4) EPC

(43) Date of publication:
**09.09.2026 Bulletin 2026/37**

(21) Application number: **24885801.1**

(22) Date of filing: **31.10.2024**

(51) International Patent Classification (IPC):
***B01J 20/02*** *(2006.01)* ***B01D 15/00*** *(2006.01)*
***B01J 20/30*** *(2006.01)* ***B01J 20/34*** *(2006.01)*
***C01B 33/18*** *(2006.01)*

(52) Cooperative Patent Classification (CPC):
**B01D 15/00; B01J 20/02; B01J 20/30; B01J 20/34; C01B 33/18;** Y02P 10/20

(86) International application number:
**PCT/JP2024/038801**

(87) International publication number:
**WO 2025/095034 (08.05.2025 Gazette 2025/19)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **01.11.2023 JP 2023188027**
**24.07.2024 JP 2024118775**

(71) Applicant: **Mitsui Kinzoku Company, Limited**
**Tokyo 141-8584 (JP)**

(72) Inventors:
- **SASAKI, Hayato**
  **1333-2, Haraichi, Ageos-shi, Saitama (JP)**
- **SUGAHARA, Kosei**
  **1333-2, Haraichi, Ageos-shi, Saitama (JP)**
- **YUKITANI, Shunsuke**
  **1333-2, Haraichi, Ageos-shi, Saitama (JP)**
- **OSAKO,Takao**
  **1333-2, Haraichi, Ageos-shi, Saitama (JP)**

(74) Representative: **Novagraaf Technologies**
**2 rue Sarah Bernhardt**
**CS90017**
**92665 Asnières-sur-Seine Cedex (FR)**

## (54) METHOD FOR PRODUCING ADSORBING MATERIAL AND METHOD FOR RECOVERING TARGET SUBSTANCE

(57) A purpose of the present invention is to provide a method for producing (regenerating) an adsorbent or recovering a target substance by performing a desorption treatment after adsorbing a target substance on an adsorbent, the method being capable of desorbing a sufficient amount of the target substance without using aqua regia in the desorption treatment, and also capable of preventing a decrease in the adsorption performance of the adsorbent after the desorption treatment, and, in order to achieve the purpose, the present invention provides a method for producing an adsorbent or recovering a target substance, including the following steps of:
(1) preparing a second adsorbent obtained by performing a contact treatment of a first adsorbent with a liquid containing a target substance, wherein the first adsorbent has a co-continuous structure formed of: a ceramic skeleton including mesopores; and macropores, and wherein a surface of the ceramic skeleton is modified with a functional group capable of adsorbing the target substance,
(2) desorbing the target substance from the second adsorbent by performing a contact treatment of the second adsorbent with an acidic solution excluding aqua regia, thereby obtaining a third adsorbent or the target substance.



Processed by Luminess, 75001 PARIS (FR)

(Cont. next page)

3
1
3
2
1
2
3
2
1
3
1
3
2
1
2
3
1
3
3
3
1
3
2
1
3
2
3
1
3
1
3
3
2
3
2
3
1
3
2

[FIG. 1]

## Description

### FIELD OF INVENTION

The present invention relates to a method for producing an adsorbent, and a method for recovering a target substance.

### BACKGROUND ART

From the viewpoints of carbon neutrality, SDGs, and the like, technologies for reusing or recovering target substances have attracted attention. Examples of such technologies include techniques for recovering metals or metal ions contained in liquids. As technologies for recovering metals or metal ions, adsorbents, the surface of which are modified with functional groups, are known (for example, Patent Documents 1 to 3). The adsorbents can be reused after desorbing the adsorbed metals or metal ions.

CITATION LIST

PATENT DOCUMENT

Patent Document 1: JP-A-3-158426
Patent Document 2: JP-A-2016-11456
Patent Document 3: WO 2017/002871

### SUMMARY OF INVENTION

TECHNICAL PROBLEM

The present inventors have found that, when, after adsorbing a target substance selected from the group consisting of metals, metal ions, metalloids, and metalloid ions on an adsorbent, a desorption treatment of the target substance is performed, the adsorption performance of the adsorbent after the desorption treatment may decrease as compared with that before the desorption treatment, depending on the conditions of the desorption treatment. The present inventors have also found that this tendency is particularly remarkable when the desorption treatment is performed under severe conditions for the purpose of increasing the amount of the target substance to be desorbed (for example, when the desorption treatment is performed using aqua regia).

A decrease in the adsorption performance of an adsorbent after a desorption treatment, as compared with that before the desorption treatment, causes a problem when the adsorbent is repeatedly used. Accordingly, a purpose of the present invention is to provide a method for producing (regenerating) an adsorbent or recovering a target substance by performing a desorption treatment after adsorbing a target substance selected from the group consisting of metals, metal ions, metalloids, and metalloid ions on an adsorbent, the method being capable of desorbing a sufficient amount of the target substance without using aqua regia in the desorption treatment, and also capable of preventing a decrease in the adsorption performance of the adsorbent after the desorption treatment.

SOLUTION TO PROBLEM

In order to solve the above problem, the present invention provides the following methods.

[1] A method for producing an adsorbent, including the following steps of:

(1A) preparing a second adsorbent obtained by performing a contact treatment of a first adsorbent with a liquid containing a target substance,

wherein the first adsorbent has a co-continuous structure formed of: a ceramic skeleton including mesopores; and macropores,
wherein a surface of the ceramic skeleton is modified with a functional group capable of adsorbing the target substance, and
wherein the target substance is selected from the group consisting of metals, metal ions, metalloids, and

metalloid ions; and

(2A) desorbing the target substance from the second adsorbent by performing a contact treatment of the second adsorbent with an acidic solution excluding aqua regia, thereby obtaining a third adsorbent,

wherein a percentage of an adsorption amount of the target substance in the second adsorbent prepared in step (1A) relative to a saturated adsorption amount of the target substance in the first adsorbent is 50% or more, and
wherein a percentage of a desorption amount of the target substance in step (2A) relative to the adsorption amount of the target substance in the second adsorbent prepared in step (1A) is 70% or more.

(2) The method according to (1), wherein the contact treatment in step (2A) is performed at a temperature of 90°C or lower.
(3) The method according to (1) or (2), wherein the acidic solution contains at least one selected from the group consisting of an inorganic acid and an ammonium salt.
[4] The method according to any one of (1) to (3), wherein a total concentration of an inorganic acid and an ammonium salt contained in the acidic solution is 0.1 mol/L or more and 13 mol/L or less.
(5) The method according to any one of (1) to (4), wherein the acidic solution contains at least one selected from the group consisting of hydrochloric acid, nitric acid, and ammonium chloride.
(6) The method according to any one of (1) to (5), wherein the functional group includes at least one selected from the group consisting of a primary amino group, a secondary amino group, a tertiary amino group, a quaternary ammonium group, an imino group, a nitrilo group, a nitrogen-containing heterocyclic group, a thiol group, a sulfo group, a phosphonic acid group, and a carboxyl group.
(7) The method according to any one of (1) to (6), wherein the ceramic skeleton contains at least one selected from the group consisting of silicon, aluminum, tin, cerium, titanium, and zirconium.
(8) The method according to any one of (1) to (7), wherein the target substance is selected from the group consisting of transition metals including rare-earth metals; metals and metalloids of Groups 13 to 16; transition metal ions including rare-earth metal ions; and metal ions and metalloid ions of Groups 13 to 16.
(9) A method for recovering a target substance, including the following steps of:

(1B) preparing a second adsorbent obtained by performing a contact treatment of a first adsorbent with a liquid containing a target substance,

wherein the first adsorbent has a co-continuous structure formed of: a ceramic skeleton including mesopores; and macropores,
wherein a surface of the ceramic skeleton is modified with a functional group capable of adsorbing the target substance, and
wherein the target substance is selected from the group consisting of metals, metal ions, metalloids, and metalloid ions; and
(2B) desorbing the target substance from the second adsorbent by performing a contact treatment of the second adsorbent with an acidic solution excluding aqua regia, thereby obtaining the target substance,
wherein a percentage of an adsorption amount of the target substance in the second adsorbent prepared in step (1B) relative to a saturated adsorption amount of the target substance in the first adsorbent is 50% or more, and
wherein a percentage of a desorption amount of the target substance in step (2B) relative to the adsorption amount of the target substance in the second adsorbent prepared in step (1B) is 70% or more.

ADVANTAGEOUS EFFECTS OF INVENTION

According to the present invention, there are provided a method for producing (regenerating) an adsorbent or recovering a target substance by performing a desorption treatment after adsorbing a target substance selected from the group consisting of metals, metal ions, metalloids, and metalloid ions on an adsorbent, the method being capable of desorbing a sufficient amount of the target substance without using aqua regia in the desorption treatment, and also capable of preventing a decrease in the adsorption performance of the adsorbent after the desorption treatment.

Even when the method of the present invention is repeatedly applied to an adsorbent to produce (regenerate) an adsorbent or to recover a target substance, a sufficient amount of the target substance can be desorbed without using aqua regia in a desorption treatment, and a decrease in the adsorption performance of the adsorbent after the desorption treatment can be prevented. Accordingly, the method of the present invention is particularly useful when an adsorbent is

repeatedly produced (regenerated) or a target substance is repeatedly recovered.

**BRIEF DESCRIPTION OF DRAWINGS**

FIG. 1 is an enlarged view of a portion of a surface of an adsorbent according to one embodiment.
FIG. 2 is a schematic diagram of a flow adsorption apparatus used in Examples and Comparative Examples.

**DETAILED DESCRIPTION OF INVENTION**

<<Definitions of Terms>>

The terms used in the present specification will be described below. Unless otherwise specified, the following descriptions apply throughout the present specification.

<Halogen Atom>

The term "halogen atom" includes a fluorine atom, a chlorine atom, a bromine atom, and an iodine atom.

<Alkyl Group>

The number of carbon atoms of an alkyl group is, for example, 1 to 20, preferably 1 to 10, more preferably 1 to 6, still more preferably 1 to 5, and even more preferably 1 to 4. The alkyl group may be linear or branched. Examples of the alkyl group include a methyl group, an ethyl group, a propyl group, and a butyl group.

<Aryl Group>

An aryl group is, for example, a monocyclic or polycyclic (e.g., bicyclic or tricyclic) aromatic hydrocarbon ring group. The number of carbon atoms of the aryl group is, for example, 6 to 14, preferably 6 to 10. The polycyclic ring may be a fused ring. Examples of the aryl group include a phenyl group and a naphthyl group.

<Arylalkyl Group>

An arylalkyl group is an alkyl group having one or more aryl groups, and the alkyl group and the aryl group are as described above. The number of aryl groups contained in the arylalkyl group is, for example, 1, 2, or 3.

<Alkylaryl Group>

An alkylaryl group is an aryl group having one or more alkyl groups, and the alkyl group and the aryl group are as described above. The number of alkyl groups contained in the alkylaryl group is, for example, 1, 2, or 3.

<Alkyloxy Group>

An alkyloxy group is a group represented by the formula: -O-alkyl group, and the alkyl group is as described above.

<Alkylene Group>

An alkylene group is a bivalent functional group obtained by removing one hydrogen atom from an alkyl group, and the alkyl group is as described above. Examples of the alkylene group include a methylene group, an ethylene group, a propylene group, a butylene group, a pentylene group, a hexylene group, a heptylene group, an octylene group, a nonylene group, and a decylene group.

<Arylene Group>

An arylene group is a bivalent functional group obtained by removing one hydrogen atom from an aryl group, and the aryl group is as described above. Examples of the arylene group include a phenylene group, a pentalenylene group, an

indenylene group, a naphthalenylene group, an azulenylene group, a phenanthrenylene group, and a biphenylene group.

<One or More Substituents>

The term "one or more substituents" refers to preferably 1 to 3 substituents, and more preferably 1 or 2 substituents. The one or more substituents may each independently be selected from, for example, a hydroxyl group, halogen atoms, a thiol group, a carboxyl group, a phosphate group, a phosphonic acid group, a sulfo group, a keto group, an alkoxy group, and an oxo group.

<Target Substance>

Target substances include metals, metal ions, metalloids, and metalloid ions.

Metals and metalloids include transition metals, and metals and metalloids of Groups 13 to 16. Metal ions and metalloid ions include transition metal ions (including rare earth metal ions), and metal ions and metalloid ions of Groups 13 to 16.

Transition metals include Ti, V, Cr, Mn, Fe, Co, Ni, Cu, Zr, Nb, Mo, Tc, Ru, Rh, Pd, Ag, Hf, Ta, W, Re, Os, Ir, Pt, Au, Zn, Cd, Hg, and rare earth metals.

Rare earth metals include Sc, Y, La, Ce, Pr, Nd, Pm, Sm, Eu, Gd, Tb, Dy, Ho, Er, Tm, Yb, and Lu.

Metals and metalloids of Groups 13 to 16 include B, Al, Si, Ga, Ge, As, Se, In, Sn, Sb, Te, Tl, Pb, Bi, Po, and At. Among these, B, Si, Ge, As, Se, Po, At, Sb, and Te are metalloids.

From the viewpoint of high demand for adsorption recovery, the target substance is preferably selected from noble metals and noble metal ions such as Pt, Pd, Rh, Ru, Ir, Os, Au, Ag, Re, and ions thereof, more preferably selected from Pt, Pd, Rh, Ru, Ir, Os, Au, and ions thereof, and still more preferably selected from Pt, Pd, Rh, Ir, Au, and ions thereof.

Examples of forms of metals and metalloids adsorbed on functional groups include metal nanoparticles and metalloid nanoparticles. Metals adsorbed on functional groups may have a ligand or may not have a ligand. Metal ions and metalloid ions adsorbed on functional groups may have a ligand or may not have a ligand.

<Functional Group Capable of Adsorbing Target Substance> (which may be referred to as an "adsorptive functional group" in the present specification)

An adsorptive functional group may be capable of adsorbing one target substance, or may be capable of adsorbing two or more target substances.

The adsorptive functional group is preferably a functional group containing at least one selected from the group consisting of a nitrogen atom-containing group, a thiol group, a sulfo group, a phosphate group, a phosphonic acid group, a carboxyl group, a hydroxyl group, and a keto group, more preferably a functional group containing at least one selected from the group consisting of a nitrogen atom-containing group, a thiol group, a sulfo group, a phosphonic acid group, and a carboxyl group, and still more preferably a functional group containing at least one nitrogen atom-containing group. The adsorptive functional group may be a functional group composed of at least one selected from the above group. The adsorptive functional group may also be a functional group composed of at least one nitrogen atom-containing group.

The nitrogen atom-containing group is preferably a functional group containing at least one selected from the group consisting of a primary amino group, a secondary amino group, a tertiary amino group, a quaternary ammonium group, an imino group, a nitrilo group, and a nitrogen atom-containing heterocyclic group, and more preferably a functional group containing at least one selected from the group consisting of a primary amino group, a secondary amino group, a tertiary amino group, a quaternary ammonium group, an imino group, and a nitrilo group. The nitrogen atom-containing group may be a functional group composed of at least one selected from the above group.

The primary amino group is represented by the formula: $-NH_2$. The secondary amino group is represented by the formula: $-NHR^1$. The tertiary amino group is represented by the formula: $-NR^1R^2$. The quaternary ammonium group is represented by the formula: $-N^+R^1R^2R^3$. $R^1$, $R^2$, and $R^3$ are each independently, for example, an alkyl group optionally having one or more substituents, an aryl group optionally having one or more substituents, an arylalkyl group optionally having one or more substituents, or an alkylaryl group optionally having one or more substituents. The secondary amino group and the tertiary amino group may be aliphatic amino groups or aromatic amino groups, but aliphatic amino groups are preferable. Examples of aliphatic amino groups include secondary amino groups in which $R^1$ is an alkyl group optionally having one or more substituents, and tertiary amino groups in which both $R^1$ and $R^2$ are alkyl groups optionally having one or more substituents. Examples of aromatic amino groups include secondary amino groups in which $R^1$ is an aryl group optionally having one or more substituents, an arylalkyl group optionally having one or more substituents, or an alkylaryl group optionally having one or more substituents, and tertiary amino groups in which at least one of $R^1$ and $R^2$ is an aryl group optionally having one or more substituents, an arylalkyl group optionally having one or more substituents, or an alkylaryl group optionally having one or more substituents. The quaternary ammonium group may be an aliphatic ammonium group or an aromatic ammonium group, but an aliphatic ammonium group is preferable. Examples of aliphatic ammonium groups include quaternary ammonium groups in which $R^1$, $R^2$, and $R^3$ are each independently alkyl groups

optionally having one or more substituents. Examples of aromatic ammonium groups include quaternary ammonium groups in which at least one of $R^1$, $R^2$, and $R^3$ is an aryl group optionally having one or more substituents, an arylalkyl group optionally having one or more substituents, or an alkylaryl group optionally having one or more substituents.

Examples of secondary amino groups include aliphatic amino groups such as an N-methylamino group, an N-ethylamino group, an N-propylamino group, and an N-isopropylamino group, and aromatic amino groups such as an N-phenylamino group (an anilino group).

Examples of tertiary amino groups include aliphatic amino groups such as an N,N-dimethylamino group, an N,N-diethylamino group, an N,N-methylethylamino group, an N,N-dipropylamino group, and an N,N-diisopropylamino group, and aromatic amino groups such as an N,N-diphenylamino group.

Examples of quaternary ammonium groups include trialkylammonium groups such as a trimethylammonium group, a triethylammonium group, and a tributylammonium group. Examples of counterions with respect to the nitrogen atom constituting the quaternary ammonium group include a chloride ion, a bromide ion, and a hydroxide ion.

The imino group is a divalent group represented by the formula: =NH or the formula: -NH-. The imino group may be bonded to one carbon atom via a double bond (that is, C=NH), or may be bonded to two carbon atoms via single bonds (that is, C-NH-C). The -NH- in the secondary amino group (-NH$R^1$) may correspond to an imino group, but the secondary amino group is preferably a terminal group. That is, $R^1$ in the secondary amino group (-NH$R^1$) may have at least one functional group selected from the group consisting of a primary amino group, a secondary amino group, a tertiary amino group, a quaternary ammonium group, an imino group, a nitrilo group, and a nitrogen atom-containing heterocyclic group, but preferably does not have such a functional group.

The nitrilo group is a trivalent group represented by the formula: ≡N or the formula: -N<. The nitrilo group may be bonded to one carbon atom via a triple bond (that is, C≡N), or may be bonded to three carbon atoms via single bonds (that is, C-N(-C)-C). In the former case, the nitrilo group forms a cyano group (-CN) together with one carbon atom. The -N< in the tertiary amino group (-N$R^1R^2$) may correspond to a nitrilo group, but the tertiary amino group is preferably a terminal group. That is, $R^1$ and $R^2$ in the tertiary amino group (-N$R^1R^2$) may each have at least one functional group selected from the group consisting of a primary amino group, a secondary amino group, a tertiary amino group, a quaternary ammonium group, an imino group, a nitrilo group, and a nitrogen atom-containing heterocyclic group, but preferably do not have such functional groups.

The nitrogen atom-containing heterocyclic group is a monovalent group containing at least one (e.g., one, two, or three) nitrogen atoms as ring-constituting atoms. The nitrogen atom-containing heterocyclic group may contain, in addition to at least one nitrogen atom, one or more (e.g., one, two, or three) heteroatoms selected from the group consisting of oxygen atoms and sulfur atoms as ring-constituting atoms. The nitrogen atom-containing heterocyclic group may be monocyclic or polycyclic (e.g., bicyclic or tricyclic). The number of ring members of a monocyclic nitrogen atom-containing heterocyclic group is, for example, from 3 to 8, preferably 5 or 6. The number of ring members of a polycyclic nitrogen atom-containing heterocyclic group is, for example, from 9 to 14, preferably 9 or 10. The nitrogen atom-containing heterocyclic group may have aromaticity or may not have aromaticity (that is, may be an aromatic heterocyclic group or an aliphatic heterocyclic group). The nitrogen atom-containing heterocyclic group may have one or more substituents.

Examples of nitrogen atom-containing heterocyclic groups include, for example, 5- or 6-membered monocyclic nitrogen atom-containing heterocyclic groups. Examples of 5- or 6-membered monocyclic nitrogen atom-containing heterocyclic groups having aromaticity include a pyrrolyl group, an imidazolyl group, a pyrazolyl group, an oxazolyl group, a thiazolyl group, an isothiazolyl group, a triazolyl group, an oxadiazolyl group, a thiadiazolyl group, a tetrazolyl group, a pyridyl group, a pyridazinyl group, a pyrimidinyl group, and a pyrazinyl group. Examples of 5- or 6-membered monocyclic nitrogen atom-containing heterocyclic groups having no aromaticity include a pyrrolidinyl group, a pyrazolidinyl group, an imidazolidinyl group, a piperidinyl group, a piperazinyl group, a morpholino group, and a thiomorpholino group. The 5- or 6-membered monocyclic nitrogen atom-containing heterocyclic groups having no aromaticity may have one or two unsaturated bonds in the ring, and examples of such nitrogen atom-containing heterocyclic groups include a 1,2-dihydropyridyl group, a 1,4-dihydropyridyl group, and a 1,2,5,6-tetrahydropyridyl group. The 5- or 6-membered monocyclic nitrogen atom-containing heterocyclic groups having aromaticity or no aromaticity may be fused with a benzene ring, and examples of polycyclic (e.g., bicyclic or tricyclic) nitrogen atom-containing heterocyclic groups include an indolyl group, an isoindolyl group, an indazolyl group, a benzimidazolyl group, a benzotriazolyl group, an oxazolopyrimidinyl group, a thiazolopyrimidinyl group, a pyrrolopyridinyl group, a pyrrolopyrimidinyl group, an imidazopyridinyl group, a purinyl group, a quinolinyl group, an isoquinolinyl group, a cinnolinyl group, a phthalazinyl group, a quinazolinyl group, a quinoxalinyl group, and a naphthyridinyl group.

The bonding position of the nitrogen atom-containing heterocyclic group may be formed by any ring-constituting atom. The bonding position of the nitrogen atom-containing heterocyclic group is usually formed by a carbon atom or a nitrogen atom. When the bonding position of the nitrogen atom-containing heterocyclic group is formed by a nitrogen atom, the nitrogen atom-containing heterocyclic group corresponds to a heterocyclic amino group. Examples of 5- or 6-membered monocyclic heterocyclic amino groups having aromaticity include a 1-pyrrolyl group, a 1-imidazolyl group, a 1-pyrazolyl group, a 3-oxazolyl group, a 3-thiazolyl group, a 1-pyridyl group, a 1-pyridazinyl group, a 1-pyrimidinyl group,

and a 1-pyrazinyl group. Examples of 5- or 6-membered monocyclic heterocyclic amino groups having no aromaticity (that is, alicyclic amino groups) include a 1-pyrrolidinyl group, a 1-pyrazolidinyl group, a 1-imidazolidinyl group, a 1-piperidinyl group, a 1-piperazinyl group, a morpholino group, and a thiomorpholino group.

Examples of target substances suitable for adsorption by a primary amino group, a secondary amino group, a tertiary amino group, a quaternary ammonium group, an imino group, a nitrilo group, and a nitrogen atom-containing heterocyclic group include Co, Cr, Cu, Fe, Ni, Os, Pd, Pt, Rh, Ru, Au, Ir, W, Zn, V, Mn, and Re.

Examples of target substances suitable for adsorption by a thiol group include Ag, Co, Cu, Fe, Ir, Ni, Os, Pd, Au, Pt, Rh, Ru, Sc, Zn, and Re.

Examples of target substances suitable for adsorption by a sulfo group include Cd, Cr, Pb, Zn, Al, Cu, Mn, Sn, Fe, Co, Ni, Ag, and Bi.

Examples of target substances suitable for adsorption by a phosphate group include In, Al, Bi, Pb, Au, Ir, Pd, Pt, V, Cr, Mn, Fe, Co, Ni, Cu, Zn, Ag, Cd, and Sn.

Examples of target substances suitable for adsorption by a phosphonic acid group include In, Al, Bi, Pb, Au, Ir, Pd, Pt, V, Cr, Mn, Fe, Co, Ni, Cu, Zn, Ag, Cd, and Sn.

Examples of target substances suitable for adsorption by a carboxyl group include Co, Cr, Cu, Fe, Ir, Ni, Os, Pd, Rh, Ru, Sc, Zn, V, Mn, and Re.

<First Adsorbent>

A first adsorbent includes a porous body having a co-continuous structure formed of: a ceramic skeleton including mesopores; and macropores, and a surface of the ceramic skeleton is modified with an adsorptive functional group.

<Form and Shape of Porous Body>

The form of the porous body is not particularly limited. Examples of the form of the porous body include a particle, an aggregate, and a shaped body. The shape of the porous body is not particularly limited. Examples of the shape of the porous body include columnar, spherical (e.g., true spherical and ellipsoidal spherical), needle-like, scaly (flake-like), polyhedral, flattened, ground, and aggregated shapes. Examples of the columnar shape include cylindrical, elliptic cylindrical, and polygonal columnar shapes (e.g., quadrangular columnar, hexagonal columnar, and octagonal columnar shapes). The columnar shape may be a shape where, for example, such a cylindrical, elliptic cylindrical, or polygonal columnar shape is partially cut off.

In a case where the porous body is in the form of a particle, the particle size is, for example, 0.5 μm or more and 7.0 mm or less. The "particle size" refers to an equivalent circle diameter, namely, the diameter of a circle assumed to have the same area as the area of the particle in an observed image (e.g., SEM image) of the particle. The particle size can be adjusted by, for example, classification.

In a case where the porous body is in the form of a columnar body, the length is, for example, 1.0 mm or more and 500 mm or less, and the diameter is, for example, 1.5 mm or more and 20 mm or less. The "length" refers to the dimension in the direction in which the columnar body extends. The "diameter" refers to the diameter of an end face in the extension direction of the columnar body. In a case where the end face is circular, the "diameter" refers to the diameter of the circular end face. In a case where the end face has a shape other than a circular shape, the "diameter" refers to the diameter of a circle circumscribed around the end face.

<Structure of Porous Body Before Modification>

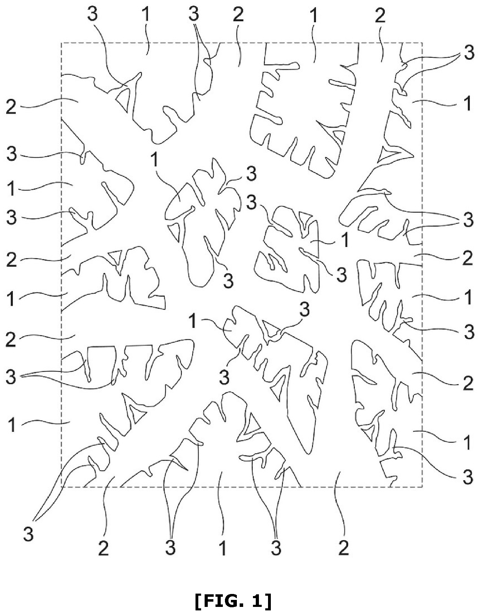

Hereinafter, a structure of a porous body before modification with an adsorptive functional group will be described with reference to FIG. 1. FIG. 1 is an enlarged view of a portion of a surface of a porous body according to one embodiment.

As illustrated in FIG. 1, the porous body has a co-continuous structure formed of: a ceramic skeleton 1 including mesopores 3; and macropores 2.

In the porous body, the ceramic skeleton 1 and the macropores 2 each have a continuous three-dimensional network structure and are intertangled with each other, thereby forming the co-continuous structure of the ceramic skeleton 1 and the macropores 2. The fact that the porous body has the co-continuous structure can be confirmed by observing a surface or cross section of the porous body with a scanning electron microscope (SEM).

By virtue of the porous body having the co-continuous structure, target substances can be efficiently adsorbed and desorbed, so that a sufficient amount of the target substances can be desorbed without using aqua regia, and a decrease in the adsorption performance of an adsorbent after a desorption treatment can be prevented.

The most frequent pore diameter of the macropores 2 is preferably 0.20 μm or more, more preferably 0.40 μm or more, and still more preferably 0.60 μm or more, from the viewpoint of enhancement in adsorption and desorption

performance. The most frequent pore diameter of the macropores 2 is preferably 5.0 μm or less, more preferably 4.0 μm or less, and still more preferably 3.0 μm or less, from the same viewpoint. Each of these upper limit values may be combined with any of the lower limit values described above.

The "most frequent pore diameter of the macropores 2" refers to the most frequent pore diameter of the macropores, measured in a pore diameter range of 50 nm to 500 μm by a mercury intrusion method, as described in the Examples below.

The most frequent pore diameter of the mesopores 3 is preferably 2.0 nm or more, more preferably 5.0 nm or more, and still more preferably 10.0 nm or more, from the viewpoint of enhancement in adsorption and desorption performance. The most frequent pore diameter of the mesopores 3 is preferably 50.0 nm or less, more preferably 40.0 nm or less, and still more preferably 35.0 nm or less, from the same viewpoint. Each of these upper limit values may be combined with any of the lower limit values described above.

The "most frequent pore diameter of the mesopores 3" refers to the most frequent pore diameter of the mesopores, measured from a nitrogen adsorption-desorption isotherm by a BJH method, as described in the Examples below.

The ratio of the most frequent pore diameter of the macropores 2 to the most frequent pore diameter of the mesopores 3 is preferably 15 or more, more preferably 20 or more, still more preferably 30 or more, and even more preferably 33 or more, from the viewpoint of enhancement in adsorption and desorption performance. The ratio is preferably 300 or less, more preferably 200 or less, still more preferably 150 or less, and even more preferably 100 or less, from the same viewpoint. Each of these upper limit values may be combined with any of the lower limit values described above.

The specific surface area of the porous body, measured from a nitrogen adsorption-desorption isotherm by a BET method, is preferably 100 $m^2/g$ or more, more preferably 120 $m^2/g$ or more, and still more preferably 130 $m^2/g$ or more, from the viewpoint of enhancement in adsorption and desorption performance. The upper limit of the specific surface area of the porous body is not particularly limited. The method of measuring the specific surface area from a nitrogen adsorption-desorption isotherm by a BET method is as described in the Examples below.

The total pore volume of the porous body, measured by a mercury intrusion method, is preferably 1.5 mL/g or more and 4.0 mL/g or less, more preferably 1.8 mL/g or more and 3.5 mL/g or less, and still more preferably 2.5 mL/g or more and 3.5 mL/g or less, from the viewpoint of enhancement in adsorption and desorption performance. The method of measuring the total pore volume by a mercury intrusion method is as described in the Examples below.

The porosity of the porous body, measured by a mercury intrusion method, is preferably 70% or more and 90% or less, more preferably 70% or more and 85% or less, and still more preferably 75% or more and 85% or less, from the viewpoint of enhancement in adsorption and desorption performance. The method of measuring the porosity by a mercury intrusion method is as described in the Examples below.

<Material of Porous Body>

The ceramic constituting the ceramic skeleton is, for example, an oxide ceramic containing an element selected from the group consisting of metalloid elements or metal elements. The ceramic skeleton may contain one element selected from the group consisting of metalloid elements and metal elements, or may contain two or more elements selected from the above group.

Examples of the metalloid element include silicon. Examples of a silicon-containing oxide ceramic include silica ($SiO_2$).

Examples of the metal element include aluminum, tin, and transition metal elements such as zinc, cerium, titanium, zirconium, vanadium, chromium, iron, cobalt, nickel, palladium, platinum, copper, silver, and gold. Among these, the metal element is preferably selected from the group consisting of aluminum, tin, cerium, titanium, and zirconium, from the viewpoint of ease of production of the porous body. Examples of the oxide ceramic containing aluminum, tin, cerium, titanium, or zirconium include alumina ($Al_2O_3$), tin oxide ($SnO_2$), ceria ($CeO_2$), titania ($TiO_2$), and zirconia ($ZrO_2$).

The oxide ceramic may further contain, in addition to silicon, aluminum, tin, or a transition metal element, any element selected from alkali metal elements such as lithium and sodium, alkaline earth metal elements such as magnesium and calcium, and rare earth elements such as lanthanum, scandium, yttrium, and gadolinium.

<Method for Producing Porous Body >

The porous body can be produced by, for example, a method described in International Publication No. 2022/163834, specifically a method including the following steps of:

(a) producing a polymetalloxane gel by a sol-gel method;
(b) forming pores in a skeleton of the polymetalloxane gel produced in step (a); and

(c) firing the polymetalloxane gel subjected to step (b), optionally after washing and/or drying the polymetalloxane gel, to thereby produce a ceramic monolith (porous body).

In one embodiment, the ceramic monolith is preferably a silica monolith. The silica monolith has a co-continuous structure formed of: a silica skeleton including mesopores; and macropores.

In another embodiment, the ceramic monolith can be a monolith of alumina, tin oxide, ceria, titania, or zirconia. Also in such a case, the monolith has a co-continuous structure formed of: a skeleton of alumina, tin oxide, ceria, titania, or zirconia including mesopores; and macropores.

The ceramic monolith thus produced may be shaped and used as an adsorbent (e.g., an adsorbent having the shape of a columnar body). Alternatively, a shaped ceramic monolith produced using a mold or the like may be used as is or, if necessary, shaped and used as an adsorbent (e.g., an adsorbent having the shape of a columnar body). For example, the shaped ceramic monolith can be produced using a mold for shaping the gel into a desired shape in the gel producing step. The average diameter of the shaped ceramic monolith is smaller than the average diameter of the mold.

The ceramic monolith thus produced may be pulverized and used as an adsorbent. The pulverization can be performed according to a conventional method. The pulverization can be performed using, for example, a mortar, a hammer mill, a ball mill, a bead mill, a jet mill, or a roller mill. The particle size of the adsorbent after pulverization is preferably 0.5 μm or more and 7.0 mm or less, more preferably 0.5 μm or more and 5.0 mm or less, still more preferably 2.0 μm or more and 4.0 mm or less, and even more preferably 5.0 μm or more and 3.0 mm or less. The "particle size" refers to an equivalent circle diameter, namely, the diameter of a circle assumed to have the same area as the area of the adsorbent after pulverization in an observed image (e.g., SEM image) of the adsorbent after pulverization.

<Surface Modification>

In the first adsorbent, the surface of the ceramic skeleton is modified with an adsorptive functional group. The surface of the ceramic skeleton may be modified only with the adsorptive functional group, or may be modified with one or more functional groups other than the adsorptive functional group in addition to the adsorptive functional group. The adsorptive functional group may be directly bonded to the surface of the ceramic skeleton, or may be bonded to the surface of the ceramic skeleton via a linker.

The surface of the ceramic skeleton includes an internal surface and an external surface of the ceramic skeleton. The internal surface of the ceramic skeleton includes the internal surfaces of macropores and mesopores present inside the ceramic skeleton (i.e., not exposed on the external surface of the ceramic skeleton). The external surface of the ceramic skeleton includes the internal surfaces of macropores and mesopores exposed on the external surface of the ceramic skeleton. It is preferable that at least the internal surface of the ceramic skeleton be modified with an adsorptive functional group.

Examples of methods for introducing an adsorptive functional group onto the surface of the ceramic skeleton include a method involving chemically fixing a compound having an adsorptive functional group to the surface of the ceramic skeleton via a covalent bond, and a method involving physically fixing a compound having an adsorptive functional group to the surface of the ceramic skeleton through an ionic bonding or physical interactions such as hydrophobic interactions. Examples of methods for chemically introducing a compound having an adsorptive functional group onto the surface of the ceramic skeleton include a method involving reacting a functional group (e.g., a hydroxyl group) on the surface of the ceramic skeleton with a silane coupling agent having an adsorptive functional group to thereby chemically fix the silane coupling agent having an adsorptive functional group to the surface of the ceramic skeleton.

In one embodiment, a compound having a nitrogen atom-containing group is fixed to the surface of the ceramic skeleton, whereby the surface of the ceramic skeleton is modified with a nitrogen atom-containing group. Examples of methods for introducing the compound having a nitrogen atom-containing group onto the surface of the ceramic skeleton include a method involving chemically fixing the compound having a nitrogen atom-containing group (for example, a silane coupling agent having a nitrogen atom-containing group) to the surface of the ceramic skeleton via a covalent bond, and a method involving physically fixing the compound having a nitrogen atom-containing group to the surface of the ceramic skeleton through an ionic bonding or physical interactions such as hydrophobic interactions. Examples of methods for chemically introducing the compound having a nitrogen atom-containing group onto the surface of the ceramic skeleton include a method involving reacting a functional group (for example, a hydroxyl group) on the surface of the ceramic skeleton with a silane coupling agent having a nitrogen atom-containing group, thereby chemically fixing the silane coupling agent to the surface of the ceramic skeleton. The compound having a nitrogen atom-containing group may be fixed to the surface of the ceramic skeleton via a linker. For example, a functional group reactive with the compound having a nitrogen atom-containing group may be introduced onto the surface of the ceramic skeleton, and thereafter the introduced functional group and the compound having a nitrogen atom-containing group may be reacted to thereby chemically fix the compound having a nitrogen atom-containing group to the surface of the ceramic skeleton. Examples of methods for introducing a functional group reactive with the compound having a nitrogen atom-containing group onto the

surface of the ceramic skeleton include a method involving reacting a functional group (for example, a hydroxyl group) on the surface of the ceramic skeleton with a silane coupling agent having a functional group reactive with the compound having a nitrogen atom-containing group, thereby chemically fixing the silane coupling agent to the surface of the ceramic skeleton. Examples of the silane coupling agent having a functional group reactive with the compound having a nitrogen atom-containing group include a silane coupling agent having an epoxy group and/or a haloalkyl group. Examples of the silane coupling agent having an epoxy group include 3-glycidyloxypropyltrimethoxysilane. Examples of the silane coupling agent having a haloalkyl group include 3-chloropropyltrimethoxysilane.

As the compound having a nitrogen atom-containing group, an amine compound can be used. The amine compound preferably has at least one nitrogen atom-containing group selected from the group consisting of a primary amino group, a secondary amino group, a tertiary amino group, a quaternary ammonium group, an imino group, a nitrilo group, and a nitrogen atom-containing heterocyclic group. In the amine compound, a portion other than the nitrogen atom-containing group may be composed of hydrogen atoms and carbon atoms, or may contain one or more other elements (for example, oxygen atoms, sulfur atoms, halogen atoms, silicon atoms, and the like) in addition to hydrogen atoms and carbon atoms.

As the amine compound, at least one selected from the group consisting of a monoamine, a diamine, a triamine, and a polyamine can be used. Two or more amine compounds may be used. The amine compound may be a silane coupling agent.

Examples of silane coupling agents having at least one nitrogen atom-containing group selected from the group consisting of a primary amino group, a secondary amino group, a tertiary amino group, a quaternary ammonium group, an imino group, a nitrilo group, and a nitrogen atom-containing heterocyclic group include silane coupling agents represented by the following formula A, B, or C.

Formula A: $R^a\text{-}R^d\text{-}Si(\text{-}R^b)_n(\text{-}R^c)_{3-n}$

Formula B: $R^a\text{-}R^d\text{-}NH\text{-}R^e\text{-}Si(\text{-}R^b)_n(\text{-}R^c)_{3-n}$

Formula C: $R^a\text{-}R^d\text{-}NH\text{-}R^e\text{-}NH\text{-}R^f\text{-}Si(\text{-}R^b)_n(\text{-}R^c)_{3-n}$

In formulas A, B, and C, $R^a$ represents a primary amino group, a secondary amino group, a tertiary amino group, a quaternary ammonium group, or a nitrogen atom-containing heterocyclic group; each of n $R^b$ independently represents an alkyl group; each of (3-n) $R^c$ independently represents an alkoxy group or a halogen group; $R^d$, $R^e$, and $R^f$ each independently represent an alkylene group, an arylene group, or a combination thereof; and n represents an integer from 0 to 2.

$R^a$ is preferably selected from the group consisting of a primary amino group, a secondary amino group, a tertiary amino group, and a nitrogen atom-containing heterocyclic group, and more preferably selected from the group consisting of a primary amino group, a secondary amino group, and a tertiary amino group.

Examples of the alkyl group represented by $R^b$ include a methyl group, an ethyl group, a propyl group, and a butyl group.

Examples of the alkoxy group or halogen group represented by $R^c$ include a methoxy group, an ethoxy group, a propoxy group, a butoxy group, a chloro group, a bromo group, and an iodo group. Among the alkoxy groups represented by $R^c$, a methoxy group or an ethoxy group is preferable. Among the halogen groups represented by $R^c$, a chloro group is preferable.

Examples of the alkylene group represented by $R^d$, $R^e$, or $R^f$ include a methylene group, an ethylene group, a propylene group, and a butylene group.

Examples of the arylene group represented by $R^d$, $R^e$, or $R^f$ include a phenylene group, a naphthylene group, and a biphenylene group.

Examples of the combination of an alkylene group and an arylene group represented by $R^d$, $R^e$, or $R^f$ include groups represented by the formula: -X-Y-, the formula: -Y-X-, the formula: -X-Y-X-, or the formula: -Y-X-Y-. In the formulas, X represents an alkylene group, and Y represents an arylene group.

The alkylene group, the arylene group, or a combination thereof represented by $R^d$, $R^e$, or $R^f$ may have one or more substituents.

The monoamine preferably has one nitrogen atom-containing group selected from the group consisting of a primary amino group, a secondary amino group, a tertiary amino group, a quaternary ammonium group, an imino group, a nitrilo group, and a nitrogen atom-containing heterocyclic group. Examples of monoamines include silane coupling agents represented by formula A, and examples of the silane coupling agents represented by formula A include 3-aminopropyltrimethoxysilane, 3-aminopropyltriethoxysilane, 3-(N-phenyl)aminopropyltrimethoxysilane, and 3-(4-pyridyl)propyltrimethoxysilane.

The diamine preferably has two nitrogen atom-containing groups selected from the group consisting of a primary

amino group, a secondary amino group, a tertiary amino group, a quaternary ammonium group, an imino group, a nitrilo group, and a nitrogen atom-containing heterocyclic group. The two nitrogen atom-containing groups may be the same or different. Examples of diamines include silane coupling agents represented by formula B, and examples of the silane coupling agents represented by formula B include 3-(2-aminoethylamino)propyltrimethoxysilane, N-(2-aminoethyl)-3-aminopropylmethyldimethoxysilane, N-(2-aminoethyl)-3-aminopropyltrimethoxysilane, N-(2-aminoethyl)-3-aminopropyltriethoxysilane, and N-(vinylbenzyl)-2-aminoethyl-3-aminopropyltrimethoxysilane hydrochloride.

The triamine preferably has three nitrogen atom-containing groups selected from the group consisting of a primary amino group, a secondary amino group, a tertiary amino group, a quaternary ammonium group, an imino group, a nitrilo group, and a nitrogen atom-containing heterocyclic group. The three nitrogen atom-containing groups may be the same or different. Examples of triamines include silane coupling agents represented by formula C, and examples of the silane coupling agents represented by formula C include 3-[2-(2-aminoethylamino)ethylamino]propyltrimethoxysilane.

The polyamine preferably has four or more nitrogen atom-containing groups selected from the group consisting of a primary amino group, a secondary amino group, a tertiary amino group, a quaternary ammonium group, an imino group, a nitrilo group, and a nitrogen atom-containing heterocyclic group. The four or more nitrogen atom-containing groups may be the same or different. Examples of polyamines include polyalkyleneimines, polyvinylamines, and polyallylamines.

Examples of polyalkyleneimines include polymers obtained by polymerizing one or more alkyleneamines by a conventional method. The polyalkyleneimine may be a polymer chemically modified by reacting a polymer obtained by polymerizing one or more alkyleneamines by a conventional method with a desired compound. The polyalkyleneimine may be linear or branched. Examples of polyalkyleneimines include triethylenetetramine, tetraethylenepentamine, pentaethylenehexamine, polyethyleneimine, polypropyleneimine, and polybutyleneimine.

The weight-average molecular weight of the polyalkyleneimine is, for example, from 146 to 30000, preferably from 146 to 15000, more preferably from 146 to 5000, and still more preferably from 146 to 1800. The weight-average molecular weight of the polyvinylamine is, for example, from 174 to 25000, preferably from 174 to 6000. The weight-average molecular weight of the polyallylamine is, for example, from 230 to 150000, preferably from 230 to 15000, more preferably from 230 to 8000, and still more preferably from 230 to 5000. The weight-average molecular weight can be measured, for example, by gel permeation chromatography using polystyrene as a standard substance.

In one embodiment, a compound having a sulfo group (hereinafter referred to as a "first compound") is fixed to the surface of the ceramic skeleton, whereby the surface of the ceramic skeleton is modified with a sulfo group. The above descriptions regarding a method for introducing the compound having a nitrogen atom-containing group onto the surface of the ceramic skeleton are applicable, unless otherwise specified, to a method for introducing the first compound onto the surface of the ceramic skeleton. In applying the above descriptions, "the compound having a nitrogen atom-containing group" is read as "the first compound".

In one embodiment, a compound having a thiol group (hereinafter referred to as a "second compound") is fixed to the surface of the ceramic skeleton, whereby the surface of the ceramic skeleton is modified with a thiol group. The above descriptions regarding a method for introducing the compound having a nitrogen atom-containing group onto the surface of the ceramic skeleton are applicable, unless otherwise specified, to a method for introducing the second compound onto the surface of the ceramic skeleton. In applying the above descriptions, "the compound having a nitrogen atom-containing group" is read as "the second compound".

As a method for modifying the surface of the ceramic skeleton with a sulfo group, a method may be adopted in which, after the second compound has been fixed to the surface of the ceramic skeleton, the thiol group contained in the second compound is converted into a sulfo group. Conversion of the thiol group into a sulfo group can be performed in accordance with a conventional method. The conversion of the thiol group into a sulfo group can be performed, for example, by a method described below. As in a case where, after the second compound has been fixed to the surface of the ceramic skeleton, the thiol group contained in the second compound is converted into a sulfo group, a case where a compound fixed to the surface of the ceramic skeleton does not initially contain a sulfo group, but the compound is derivatized so as to finally contain a sulfo group is encompassed by the expression "a compound having a sulfo group is fixed to the surface of the ceramic skeleton, whereby the surface of the ceramic skeleton is modified with a sulfo group".

Portions of the first compound other than the sulfo group and portions of the second compound other than the thiol group may each be composed of hydrogen atoms and carbon atoms, or may contain one or more other elements (for example, oxygen atoms, nitrogen atoms, halogen atoms, silicon atoms, and the like) in addition to hydrogen atoms and carbon atoms. As each of the first compound and the second compound, one or more compounds may be used, and two or more compounds may be used. The first compound and the second compound may be used in combination. As each of the first compound and the second compound, a silane coupling agent may be used.

Examples of silane coupling agents containing a sulfo group include silane coupling agents represented by formula D or E.

Formula D: $R^g\text{-}R^d\text{-}Si(\text{-}R^b)_n(\text{-}R^c)_{3-n}$

Formula E: $R^g\text{-}R^d\text{-}Si(\text{-}O\text{-}(R^h\text{-}O)_m\text{-}R^i)_n(\text{-}R^c)_{3-n}$

Examples of silane coupling agents containing a thiol group include silane coupling agents represented by formula F or G.

Formula F: $R^j\text{-}R^d\text{-}Si(\text{-}R^b)_n(\text{-}R^c)_{3-n}$

Formula G: $R^j\text{-}R^d\text{-}Si(\text{-}O\text{-}(R^h\text{-}O)_m\text{-}R^i)_n(\text{-}R^c)_{3-n}$

In formula D, $R^g$ represents a sulfo group, and $R^b$, $R^c$, $R^d$, and n have the same meanings as in formulas A to C.

In formula E, $R^g$, $R^c$, $R^d$, and n have the same meanings as in formula D, $R^h$ each independently represents an alkylene group, $R^i$ each independently represents an alkyl group, and m represents an integer of 1 to 5, preferably an integer of 1 to 3, and more preferably an integer of 1 to 2.

In formula F, $R^b$, $R^c$, $R^d$, and n have the same meanings as in formula D, and $R^j$ represents a thiol group.

In formula G, $R^c$, $R^d$, and n have the same meanings as in formula D, $R^h$, $R^i$, and m have the same meanings as in formula E, and $R^j$ has the same meaning as in formula F.

Examples of the alkylene group represented by $R^h$ include a methylene group, an ethylene group, a propylene group, and a butylene group.

Examples of the alkyl group represented by $R^i$ include a methyl group, an ethyl group, a propyl group, and a butyl group.

Examples of the silane coupling agent represented by formula D include 3-(trimethoxysilyl)-1-propanesulfonic acid.

Examples of the silane coupling agent represented by formula E include 3-(dimethoxy(2-methoxyethoxy)silyl)-1-propanesulfonic acid.

Examples of the silane coupling agent represented by formula F include 3-mercaptopropyltrimethoxysilane, 3-mercaptopropylmethyldimethoxysilane, and 3-mercaptopropyltriethoxysilane.

Examples of the silane coupling agent represented by formula G include ethoxy(3-mercaptopropyl) bis(3,6,9,12,15-pentaoxa-octacosan-1-yloxy)silane.

The amount of the adsorptive functional group contained in the first adsorbent is preferably 0.10 mmol/g or more and 6.0 mmol/g or less, more preferably 0.10 mmol/g or more and 5.0 mmol/g or less, still more preferably 1.0 mmol/g or more and 4.0 mmol/g or less, and even more preferably 1.0 mmol/g or more and 3.0 mmol/g or less, based on the mass of the first adsorbent. The "amount of the adsorptive functional group" refers to, in a case where the first adsorbent contains one adsorptive functional group, the amount of the one adsorptive functional group, and, in a case where the first adsorbent contains two or more adsorptive functional groups, the total amount of the two or more adsorptive functional groups. The amount of the adsorptive functional group can be measured in accordance with a conventional method.

When the adsorptive functional group is a nitrogen atom-containing group, the amount of the nitrogen atom-containing group refers to the amount of nitrogen atoms derived from the nitrogen atom-containing group (that is, the amount in terms of nitrogen atoms). The amount of the nitrogen atom-containing group can be measured in accordance with a conventional method. For example, the amount of the nitrogen atom-containing group can be measured by the method described in the Examples below.

When the adsorptive functional group is a sulfo group, the amount of the sulfo group refers to the amount of sulfur atoms derived from the sulfo group (that is, the amount in terms of sulfur atoms). The amount of the sulfo group can be measured in accordance with a conventional method. For example, the amount of the sulfo group can be measured by the method described in the Examples below.

When the adsorptive functional group is a thiol group, the amount of the thiol group refers to the amount of sulfur atoms derived from the thiol group (that is, the amount in terms of sulfur atoms). The amount of the thiol group can be measured in accordance with a conventional method.

When the adsorptive functional group is a phosphate group, the amount of the phosphate group refers to the amount of phosphorus atoms derived from the phosphate group (that is, the amount in terms of phosphorus atoms). The amount of the phosphate group can be measured in accordance with a conventional method.

When the adsorptive functional group is a phosphonic acid group, the amount of the phosphonic acid group refers to the amount of phosphorus atoms derived from the phosphonic acid group (that is, the amount in terms of phosphorus atoms). The amount of the phosphonic acid group can be measured in accordance with a conventional method.

When the adsorptive functional group is a carboxyl group, the amount of the carboxyl group refers to the amount of carbon atoms derived from the carboxyl group (that is, the amount in terms of carbon atoms). The amount of the carboxyl group can be measured in accordance with a conventional method.

<Method for Converting Thiol Groups into Sulfo Groups>

In one embodiment, a method for converting thiol groups into sulfo groups includes the following steps of:

(e) modifying the surface of the ceramic skeleton of a porous body with thiol groups; and
(f) converting the thiol groups into sulfo groups.

This method is advantageous in that the amount of sulfo groups can be easily adjusted.
Step (e) can be performed by bringing a porous body and a reagent for modifying the surface of the ceramic skeleton of the porous body with thiol groups (hereinafter referred to as a "first reagent") into contact with each other in a first solvent.
As the first reagent, for example, a compound having a thiol group, preferably a silane coupling agent having a thiol group, and more preferably a silane coupling agent represented by formula F or G can be used.
As the first solvent, for example, water, an aqueous solution, or a mixed solution of an organic solvent with an aqueous solution or water can be used.
The aqueous solution can be prepared by adding an acid to water. The acid can be selected from, for example, acetic acid, hydrochloric acid, nitric acid, sulfuric acid, and phosphoric acid. Among these, acetic acid is preferable. The concentration of acetic acid in the aqueous solution is, for example, 0.01 % by mass or more and 5.0 % by mass or less.
As the organic solvent, for example, alcohol solvents such as methanol, ethanol, and propanol; ether solvents such as tetrahydrofuran and 2-methyltetrahydrofuran; ketone solvents such as acetone and methyl ethyl ketone; ester solvents such as methyl acetate and ethyl acetate; halogenated hydrocarbon solvents such as dichloromethane and chloroform; aromatic hydrocarbon solvents such as toluene and xylene; and aliphatic hydrocarbon solvents such as hexane and heptane can be used.
The temperature at which the porous body and the first reagent are brought into contact with each other in the first solvent is, for example, 60°C or higher and 100°C or lower. The time for which the porous body and the first reagent are brought into contact with each other in the first solvent is, for example, 2 hours or more and 24 hours or less.
After modifying the surface of the ceramic skeleton of the porous body with thiol groups, a thiol group-modified porous body is separated from the reaction mixture by using a solid-liquid separation method such as filtration. The separated porous body is washed with a washing liquid such as pure water, then dried, and used in step (f).
Step (f) can be performed by bringing the thiol group-modified porous body obtained in step (e) and a reagent for converting thiol groups into sulfo groups (hereinafter referred to as a "second reagent") into contact with each other in a second solvent.
As the second reagent, for example, an oxidizing agent such as hydrogen peroxide, nitric acid, or meta-chloroperbenzoic acid can be used. An aqueous solution containing an oxidizing agent may be used as the second reagent. The aqueous solution containing the oxidizing agent can be prepared by adding the oxidizing agent to water. When an aqueous solution containing hydrogen peroxide is used as the second reagent, the concentration of hydrogen peroxide in the aqueous solution is, for example, 10.0 % by mass or more and 60.0 % by mass or less.
As the second solvent, for example, water can be used. When hydrogen peroxide or an aqueous solution containing hydrogen peroxide is used as the second reagent, the concentration of hydrogen peroxide in the second solvent is, for example, 5.0 % by mass or more and 30.0 % by mass or less.
The temperature at which the thiol group-modified porous body and the second reagent are brought into contact with each other in the second solvent is, for example, 40°C or higher and 80°C or lower. The time for which the thiol group-modified porous body and the second reagent are brought into contact with each other in the second solvent is, for example, 0.5 hours or more and 12 hours or less.
After converting the thiol groups contained in the thiol group-modified porous body into sulfo groups, a sulfo group-modified porous body is separated from the reaction mixture by using a solid-liquid separation method such as filtration. The separated porous body is washed with a washing liquid such as pure water and then dried, thereby obtaining a sulfo group-modified porous body.
In another embodiment, a sulfo group-modified porous body can be produced by a method including a step of directly modifying the surface of the ceramic skeleton of a porous body with sulfo groups. As such a method, for example, a method described in RSC Adv. 2017, 7, pp. 56559-56565 can be used. According to the method described in this literature, the surface of the ceramic skeleton of a porous body can be directly modified with sulfo groups by adding chlorosulfonic acid to the porous body and stirring.

<<Method for Producing Adsorbent>>

The method for producing an adsorbent of the present invention includes steps (1A) and (2A). Hereinafter, steps (1A) and (2A) will be described.

<Step (1A)>

Step (1A) is a step of preparing a second adsorbent obtained by performing a contact treatment of a first adsorbent with a liquid containing a target substance (hereinafter referred to as "liquid to be treated").

The liquid to be treated contains a target substance adsorbable by the adsorptive functional group of the first adsorbent. The liquid to be treated may contain one target substance or may contain two or more target substances.

Examples of the liquid to be treated include waste liquid discharged from plants and the like, and wastewater containing valuable metals discharged from metal refining processes, metal plating processes, and the like. The liquid to be treated usually contains water. The waste liquid, wastewater, and the like may be subjected to pretreatment, as necessary, before being brought into contact with the first adsorbent.

Examples of methods for bringing the liquid to be treated into contact with the first adsorbent include a method of immersing the first adsorbent in the liquid to be treated, and a method of feeding the liquid to be treated to a column packed with the first adsorbent. When the method of immersing the first adsorbent in the liquid to be treated is used, the second adsorbent is separated from the liquid to be treated, for example, by solid-liquid separation such as filtration, and then subjected to step (2A). When the method of feeding the liquid to be treated to a column packed with the first adsorbent is used, the second adsorbent may be taken out from the column after completion of feeding and then subjected to step (2A), or may be subjected to step (2A) without being taken out from the column after completion of feeding (that is, subjected to step (2A) in a state of the column packed with the second adsorbent). Feeding may be performed, for example, using a feeding pump. Feeding may be performed continuously or intermittently.

When the liquid to be treated is brought into contact with the first adsorbent, the target substance contained in the liquid to be treated is adsorbed on the first adsorbent, whereby a second adsorbent is obtained. The second adsorbent includes the first adsorbent and the target substance adsorbed on the first adsorbent. The second adsorbent may contain one target substance or may contain two or more target substances.

In general, it is known that adsorption efficiency increases when the contact treatment temperature is set higher. The temperature at which the liquid to be treated and the first adsorbent are brought into contact with each other is not particularly limited, but from the viewpoints of processing cost associated with temperature control and adsorption efficiency, the temperature may be, for example, 25°C or higher, 40°C or higher, or 50°C or higher. The upper limit may be, for example, 90°C or lower or 70°C or lower. Each of these upper limits may be combined with any of the above-mentioned lower limits.

In step (2A), in order to efficiently desorb a sufficient amount of the target substance from the second adsorbent by subjecting the second adsorbent to a contact treatment with an acidic solution excluding aqua regia, it is necessary that the second adsorbent contains a sufficient amount of the target substance. Accordingly, the percentage of the adsorption amount of the target substance in the second adsorbent prepared in step (1A) relative to the saturated adsorption amount of the target substance in the first adsorbent is 50% or more. This percentage is preferably 55% or more, more preferably 60% or more, still more preferably 65% or more, and even more preferably 70% or more. The upper limit is 100%.

The "saturated adsorption amount of the target substance in the first adsorbent" refers to the amount (g) of the target substance adsorbed on the first adsorbent during a period from the start of the contact treatment between the liquid to be treated and the first adsorbent until the concentration of the target substance in the liquid to be treated after contact with the first adsorbent becomes the same as the concentration of the target substance in the liquid to be treated before contact with the first adsorbent. The "amount (g) of the target substance adsorbed on the first adsorbent" refers to, in a case where one target substance is adsorbed on the first adsorbent, the amount (g) of the one target substance, and, in a case where two or more target substances are adsorbed on the first adsorbent, the total amount (g) of the two or more target substances.

For example, when a contact treatment between the liquid to be treated and the first adsorbent is performed by feeding the liquid to be treated to a column packed with the first adsorbent, and the liquid to be treated that has passed through the column is collected in a collection container, feeding is terminated at a point in time when the concentration of the target substance in the liquid to be treated that has passed through the column becomes the same as the concentration of the target substance in the liquid to be treated before passing through the column. The total amount of the target substance in the liquid to be treated collected in the collection container during a period from the start of feeding to the end of feeding is measured, and the saturated adsorption amount of the target substance in the first adsorbent can be determined based on the following formula:

Saturated adsorption amount of target substance in first adsorbent = (Total amount of target substance in liquid to be treated supplied to column during period from start of feeding to end of feeding) - (Total amount of target substance in liquid to be treated collected in collection container during period from start of feeding to end of feeding)

The "adsorption amount of the target substance in the second adsorbent prepared in step (1A)" refers to the

amount (g) of the target substance adsorbed on the first adsorbent by the contact treatment in step (1A) (that is, during a period from the start to the end of the contact treatment). The meaning of the "amount (g) of the target substance adsorbed on the first adsorbent" is the same as described above.

For example, when a contact treatment in step (1A) is performed by feeding the liquid to be treated to a column packed with the first adsorbent, and the liquid to be treated that has passed through the column is collected in a collection container, the total amount of the target substance in the liquid to be treated collected in the collection container during a period from the start of feeding to the end of feeding is measured, and the adsorption amount of the target substance in the second adsorbent can be determined based on the following formula:

Adsorption amount of target substance in second adsorbent = (Total amount of target substance in liquid to be treated supplied to column during period from start of feeding to end of feeding) - (Total amount of target substance in liquid to be treated collected in collection container during period from start of feeding to end of feeding)

The amount of the target substance adsorbed on the first adsorbent and the amount of the target substance in the liquid to be treated can be measured, for example, using an ICP emission spectrometer.

<Step (2A)>

Step (2A) is a step of desorbing the target substance from the second adsorbent by performing a contact treatment of the second adsorbent with an acidic solution excluding aqua regia (which may be referred to as a "desorption treatment" in the present specification), thereby obtaining a third adsorbent. Hereinafter, the acidic solution excluding aqua regia may be simply referred to as an "acidic solution".

From the viewpoint of desorbing a sufficient amount of the target substance in step (2A) and preventing a decrease in the adsorption performance of the adsorbent after the desorption treatment, the acidic solution preferably contains at least one selected from the group consisting of an inorganic acid and an ammonium salt.

From the viewpoint of desorbing a sufficient amount of the target substance in step (2A) and preventing a decrease in the adsorption performance of the adsorbent after the desorption treatment, the inorganic acid preferably contains at least one selected from the group consisting of hydrochloric acid, nitric acid, sulfuric acid, sulfurous acid, phosphoric acid, and boric acid, and more preferably contains at least one selected from the group consisting of hydrochloric acid and nitric acid. When the desorption treatment is performed using the above inorganic acid, deterioration of an adsorptive functional group contained in the third adsorbent due to the desorption treatment, and a resulting decrease in the adsorption performance of the third adsorbent, can be prevented.

From the viewpoint of desorbing a sufficient amount of the target substance in step (2A) and preventing a decrease in the adsorption performance of the adsorbent after the desorption treatment, the ammonium salt preferably contains at least one selected from the group consisting of ammonium chloride, ammonium sulfate, and ammonium carbonate, and more preferably contains ammonium chloride. When the desorption treatment is performed using the above ammonium salt, deterioration of an adsorptive functional group contained in the third adsorbent due to the desorption treatment, and a resulting decrease in the adsorption performance of the third adsorbent, can be prevented.

Examples of a solvent contained in the acidic solution include water.

In the present specification, aqua regia refers to a mixture of concentrated hydrochloric acid and concentrated nitric acid. The ratio of the volume of concentrated hydrochloric acid to the volume of concentrated nitric acid in aqua regia is, for example, 1.5 or more and 4.0 or less.

From the viewpoint of desorbing a sufficient amount of the target substance in step (2A) and preventing a decrease in the adsorption performance of the adsorbent after the desorption treatment, the total concentration of an inorganic acid and an ammonium salt contained in the acidic solution is preferably 0.1 mol/L or more and 13 mol/L or less, more preferably 0.5 mol/L or more and 8.0 mol/L or less, and still more preferably 1.0 mol/L or more and 6.0 mol/L or less. When the total concentration is within the above range, deterioration of an adsorptive functional group contained in the third adsorbent due to the desorption treatment, and a resulting decrease in the adsorption performance of the third adsorbent, can be prevented. The total concentration refers to, in a case where the acidic solution contains one substance selected from the group consisting of an inorganic acid and an ammonium salt, the concentration of the one substance, and, in a case where the acidic solution contains two or more substances selected from the group consisting of an inorganic acid and an ammonium salt, the total concentration of the two or more substances.

From the viewpoint of desorbing a sufficient amount of the target substance in step (2A) and preventing a decrease in the adsorption performance of the adsorbent after the desorption treatment, the contact treatment in step (2A) is preferably performed at a temperature of 90°C or lower, more preferably 70°C or lower, and still more preferably 60°C or lower. The lower limit is not particularly limited as long as the temperature does not cause freezing of the acidic solution. The lower limit may be, for example, 1°C or higher or 20°C or higher. Each of these lower limits may be combined with any of

the above-mentioned upper limits.

Examples of methods for bringing the second adsorbent into contact with the acidic solution include a method of immersing the second adsorbent in the acidic solution, and a method of feeding the acidic solution to a column packed with the second adsorbent. When the method of immersing the second adsorbent in the acidic solution is used, the third adsorbent is separated from the acidic solution, for example, by solid-liquid separation such as filtration, and then used. When the method of feeding the acidic solution to a column packed with the second adsorbent is used, the third adsorbent may be taken out from the column after completion of feeding and then used, or may be used without being taken out from the column after completion of feeding (that is, used in a state of a column packed with the third adsorbent). At least one target substance contained in the acidic solution can be recovered in accordance with a conventional method. The at least one target substance thus recovered may be subjected to treatments such as separation, concentration, and refining in accordance with a conventional method. Feeding can be performed, for example, using a feeding pump. Feeding may be performed continuously or intermittently.

From the viewpoint of desorbing a sufficient amount of the target substance in step (2A) and preventing a decrease in the adsorption performance of the adsorbent after the desorption treatment, the contact treatment in step (2A) is preferably performed using an acidic solution in an amount of 1 L/kg or more per mass of the second adsorbent. The upper limit is not particularly limited, and may be, for example, 200 L/kg or less.

When the second adsorbent is brought into contact with the acidic solution, at least one target substance is desorbed from the second adsorbent, whereby a third adsorbent is obtained. One target substance may be desorbed from the second adsorbent, or two or more target substances may be desorbed from the second adsorbent.

In order to prevent a decrease in the adsorption performance of the third adsorbent, it is necessary to desorb a sufficient amount of the target substance from the second adsorbent in step (2A). This is because if the target substance remains adsorbed on an adsorptive functional group contained in the third adsorbent, the adsorption performance of the third adsorbent decreases. Accordingly, the percentage of the desorption amount of the target substance in step (2A) relative to the adsorption amount of the target substance in the second adsorbent prepared in step (1A) is 70% or more. This percentage is preferably 75% or more, more preferably 80% or more, and still more preferably 85% or more. The upper limit is 100%. When the percentage is within the above range, a decrease in the adsorption performance of the third adsorbent can be prevented. Accordingly, the third adsorbent can adsorb a sufficient amount of the target substance.

The meaning of the "adsorption amount of the target substance in the second adsorbent prepared in step (1A)" is the same as described above.

The "desorption amount of the target substance in step (2A)" refers to the amount (g) of the target substance desorbed from the second adsorbent by the contact treatment in step (2A) (that is, during a period from the start to the end of the contact treatment). The "amount (g) of the target substance desorbed from the second adsorbent" refers to, in a case where one target substance is desorbed from the second adsorbent, the desorption amount (g) of the one target substance, and, in a case where two or more target substances are desorbed from the second adsorbent, the total desorption amount (g) of the two or more target substances.

For example, when a contact treatment in step (2A) is performed by feeding an acidic solution to a column packed with the second adsorbent, and the acidic solution that has passed through the column is collected in a collection container, the total amount of the target substance in the acidic solution collected in the collection container during a period from the start of feeding to the end of feeding can be measured and used as the desorption amount of the target substance in step (2A).

The amount of the target substance in the acidic solution can be measured, for example, using an ICP emission spectrometer.

After step (2A), the third adsorbent may be subjected to a washing treatment. The washing treatment can be performed, for example, using a washing liquid such as water.

When a desorption treatment is performed under severe conditions (for example, a desorption treatment using aqua regia) for the purpose of improving the desorption amount of the target substance, a decrease in the adsorption performance of the adsorbent after the desorption treatment is significant. In contrast, according to the method for producing an adsorbent of the present invention, a sufficient amount of the target substance can be desorbed in step (2A) without using aqua regia, and a decrease in the adsorption performance of the third adsorbent obtained in step (2A) can be prevented.

<<Method for Recovering Target Substance>>

The method for recovering a target substance of the present invention includes the following steps of:

(1B) preparing a second adsorbent obtained by performing a contact treatment of a first adsorbent with a liquid containing a target substance; and
(2B) desorbing the target substance from the second adsorbent by performing a contact treatment of the second

adsorbent with an acidic solution excluding aqua regia, thereby obtaining the target substance.

The percentage of the adsorption amount of the target substance in the second adsorbent prepared in step (1B) relative to the saturated adsorption amount of the target substance in the first adsorbent is 50% or more. The percentage of the desorption amount of the target substance in step (2B) relative to the adsorption amount of the target substance in the second adsorbent prepared in step (1B) is 70% or more.
The method for recovering a target substance the present invention can be performed in the same manner as the method for producing an adsorbent of the present invention, except that the target substance is obtained in step (2B).
The above descriptions regarding the method for producing an adsorbent of the present invention are applicable, unless otherwise specified, to the method for recovering a target substance of the present invention. In applying the above descriptions, "step (1A)" is read as "step (1B)", and "step (2A)" is read as "step (2B)".

## EXAMPLES

### [**Production Example 1**]

(1) Production of silica monolith

To a 150 mL reaction vessel, 8.67 g of polyethylene glycol 10000 (manufactured by SIGMA-ALDRICH Co., LLC), 7.80 g of urea, and 86.7 g of an acetic acid aqueous solution (6.06 % by mass) were added, and stirred at room temperature (25°C) for 10 minutes. The reaction vessel was placed in an ice bath, and the reaction solution was cooled with stirring for 15 minutes. To the cooled reaction solution, 44.7 g of tetramethoxysilane was added, and stirred for 30 minutes while being cooled in the ice bath. The reaction solution was warmed in a warm bath at 30°C, and then allowed to stand overnight in an incubator at 30°C to thereby produce a polysiloxane gel.
Next, the obtained polysiloxane gel was added to another reaction vessel containing 30 mL of 3 mol/L aqueous urea solution, and heated and refluxed for 12 hours. After completion of the reaction, the obtained polysiloxane gel was washed with water, and dried in a dryer set at 60°C for 12 hours. After drying, the polysiloxane gel was fired at 600°C for 5 hours in an air atmosphere to produce a silica monolith. The obtained silica monolith was pulverized and classified to obtain a silica monolith having a particle size of 100 μm or more and 850 μm or less.

(2) Observation with scanning electron microscope

The surface structure of the silica monolith obtained in (1) above was observed using a scanning electron microscope (JSM-7900F manufactured by JEOL Ltd.). As a result, it was confirmed that the silica monolith has a co-continuous structure.

(3) Measurement of specific surface area and most frequent pore diameter of mesopores

The specific surface area and the most frequent pore diameter of mesopores were measured using a specific surface area/pore distribution measuring apparatus (BELSORP-miniX manufactured by Microtrac-BEL Corp.). After degassing the silica monolith under reduced pressure at 400°C for 3 hours, the amounts of adsorption and desorption of nitrogen at a temperature of 77 K using liquid nitrogen were measured by a multipoint method, thereby determining an adsorption-desorption isotherm. Based on the adsorption-desorption isotherm, the specific surface area and the most frequent pore diameter were calculated. The specific surface area was calculated by the BET method, and the most frequent pore diameter was calculated by the BJH method.
The BJH method is a method of analyzing the distribution of pore volume with respect to pore diameter under the assumption that pores are cylindrical according to the standard model of Barrett-Joyner-Halenda (for details, see J. Amer. Chem. Soc., 73, 373, 1951). In the present invention, the analysis was conducted in the pore diameter range of 2 to 200 nm.

(4) Measurement of total pore volume, most frequent pore diameter of macropores, and porosity

The total pore volume, most frequent pore diameter of macropores, and porosity were measured using a mercury porosimeter (AutoPore IV 9520 manufactured by Micromeritics Instrument Corporation) by the mercury intrusion method. In the mercury intrusion method, mercury was allowed to penetrate into pores of the silica monolith by applying pressure, the pore volume and the specific surface area were determined from the pressure and the amount of mercury intruded, and the pore diameter was calculated based on the relationship between the pore volume and the specific surface area under the assumption that pores are cylindrical. In the present invention, the analysis was conducted in the pore diameter range of 50 nm to 500 μm by the mercury intrusion method. The measurements were conducted under the following conditions

and procedures.

(Measurement conditions)

- Mercury parameters

  Advancing contact angle: 130.0°
  Receding contact angle: 130.0°
  Surface tension: 485.0 mN/m (485.0 dynes/cm)
  Mercury density: 13.5335 g/mL

- Low-pressure parameters

  Discharge pressure: 50 μmHg
  Discharge time: 5.0 minutes
  Mercury intrusion pressure: 0.0035 MPa
  Equilibrium time: 10 seconds

- High-pressure parameters
  Equilibrium time: 10 seconds
- Intrusion volume: modulated to 25% or more and 90% or less
- Measurement environment: 20°C

(Measurement procedure)

(i) Weigh about 0.5 g of a sample, place it in a specimen cell, and input a weighed value.
(ii) Measure in the pressure range of 0.0048 to 0.2068 MPa at a low-pressure portion.
(iii) Measure in the pressure range of 0.2068 to 255.1060 MPa at a high-pressure portion.

(ii) and (iii) were automatically performed using the software provided with the apparatus.
The results of (3) and (4) above are shown in Table 1.

[Table 1]

Table 1

| Production Example 1 | | |
|---|---|---|
| Analysis by BET Method | Specific surface area ($m^2/g$) | 292.7 |
| Analysis by BJH Method | Most frequent pore diameter of mesopores (nm) | 25.1 |
| Analysis by mercury intrusion method | Total pore volume (mL/g) | 2.99 |
| | Most frequent pore diameter of macropores (μm) | 0.84 |
| | Porosity (%) | 80.3 |
| Ratio of most frequent pore diameter of macropores to most frequent pore diameter of mesopores | | 33.5 |

(5) Production of nitrogen atom-containing group-modified silica monolith adsorbent

The silica monolith (5.0 g) obtained in (1) above was added to a reaction vessel, and pure water (35 mL) and 3-aminopropyltrimethoxysilane (3.73 g) were added thereto. The mixture was heated under reflux at 100°C for 4 hours. The silica monolith was separated from the solution by filtration, washed with pure water (500 mL), and dried to obtain a

nitrogen atom-containing group-modified silica monolith adsorbent (6.44 g). 3-Aminopropyltrimethoxysilane is a silane coupling agent represented by the formula: $NH_2$-$CH_2CH_2CH_2$-Si(-$OCH_3$)$_3$. The nitrogen atom-containing group-modified silica monolith adsorbent obtained using 3-aminopropyltrimethoxysilane contains a primary amino group (-$NH_2$) as a nitrogen atom-containing group.

(6) Measurement of amount of nitrogen atom-containing group

The amount of nitrogen atoms contained in the silica monolith adsorbent obtained in (5) above was quantified using an oxygen-nitrogen-hydrogen analyzer ONH836 manufactured by LECO Japan LLC. The quantified amount of nitrogen atoms was defined as the amount of the nitrogen atom-containing group (-$NH_2$) contained in the silica monolith. The amount of the nitrogen atom-containing group (-$NH_2$) contained in the silica monolith adsorbent was 2.8 mmol/g, based on the mass of the silica monolith adsorbent.

**<Production Example 2>**

(1) Production of nitrogen atom-containing group-modified silica monolith adsorbent

A nitrogen atom-containing group-modified silica monolith adsorbent was produced by performing surface modification in the same manner as in Production Example 1 (5), except that N-(2-aminoethyl)-3-aminopropyltrimethoxysilane (4.63 g) was used instead of 3-aminopropyltrimethoxysilane for the silica monolith produced in Production Example 1 (1). N-(2-Aminoethyl)-3-aminopropyltrimethoxysilane is a silane coupling agent represented by the formula: $NH_2$-$CH_2CH_2$-NH-$CH_2CH_2CH_2$-Si(-$OCH_3$)$_3$. The nitrogen atom-containing group-modified silica monolith adsorbent obtained using N-(2-aminoethyl)-3-aminopropyltrimethoxysilane contains, as a nitrogen atom-containing group, a primary amino group (-$NH_2$) and an imino group (-NH-).

(2) Measurement of amount of nitrogen atom-containing group

The amount of nitrogen atoms contained in the silica monolith adsorbent obtained in (1) above was quantified using an oxygen-nitrogen-hydrogen analyzer ONH836 manufactured by LECO Japan LLC, and the quantified amount of nitrogen atoms was defined as the amount of the nitrogen atom-containing group contained in the silica monolith. The amount of the nitrogen atom-containing group contained in the silica monolith adsorbent was 2.4 mmol/g, based on the mass of the silica monolith adsorbent.

<**Production Example 3**>

(1) Production of sulfo group-modified silica monolith adsorbent

A thiol group-modified silica monolith was produced by adding 3-mercaptopropyltrimethoxysilane (2.04 g), which had been stirred at room temperature for 1 hour, an aqueous acetic acid solution (35 mL , acetic acid concentration: 0.1% by mass), and the silica monolith (5.0 g) obtained in Production Example 1 (1) to a reaction vessel, allowing the mixture to stand at room temperature for 30 minutes, and then heating the mixture at 80°C for 4 hours. The thiol group-modified silica monolith was separated from the solution by filtration, washed with pure water (500 mL), and dried to obtain a thiol group-modified silica monolith (5.91 g).

A sulfo group-modified silica monolith was produced by adding the obtained thiol group-modified silica monolith (3.0 g), an aqueous hydrogen peroxide solution (15 mL, hydrogen peroxide concentration: 30% by mass), and pure water (15 mL) to a reaction vessel, and heating the mixture at 60°C for 1 hour to convert thiol groups into sulfo groups. The sulfo group-modified silica monolith was separated from the solution by filtration, washed with pure water (500 mL), and dried to obtain a sulfo group-modified silica monolith (3.09 g).

(2) Measurement of amount of sulfo groups

The amount of sulfur atoms contained in the sulfo group-modified silica monolith was measured using a carbon-sulfur analyzer (EMIA-Expert manufactured by HORIBA, Ltd.), and the measured amount of sulfur atoms was defined as the amount of sulfo groups contained in the sulfo group-modified silica monolith. The amount of sulfo groups contained in the silica monolith adsorbent was 1.9 mmol/g, based on the mass of the silica monolith adsorbent.

<**Example 1**>

(1) First adsorption treatment (measurement of saturated adsorption amount and production of second adsorbent)

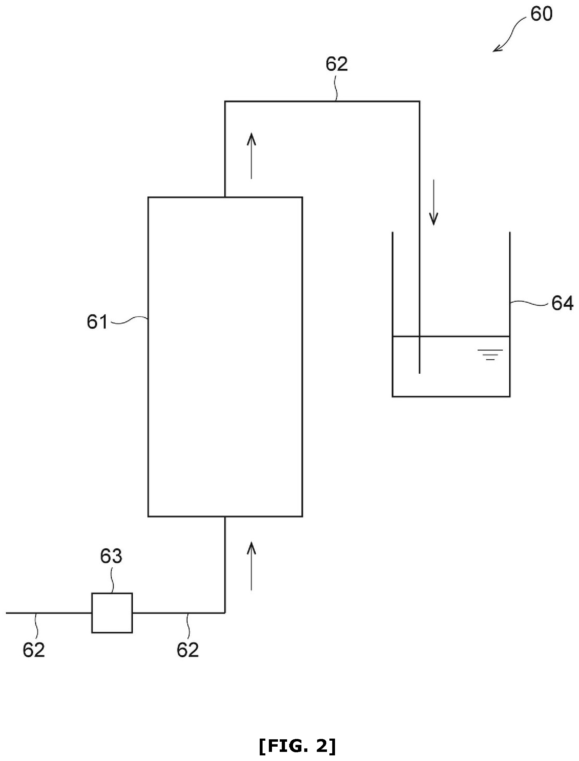

The silica monolith adsorbent (first adsorbent) obtained in Production Example 2 (0.125 g) was packed into a column (diameter: 4.0 mm, length: 100 mm), and connected to a feeding pump via tubing to prepare a flow adsorption apparatus shown in FIG. 2.

At room temperature (25°C), an iridium chloride solution containing 100 ppm of iridium was fed to the column at a flow rate of 0.2 mL/min using a feeding pump, and the solution that passed through the column was collected in a collection container. The solution was collected in fractions of 10 mL each. Feeding was continued until the iridium concentration in the collected solution reached 100 ppm.

The total amount of iridium element in the collected solution was measured using an ICP emission spectrometer (SPECTROGREEN FMD46 manufactured by Hitachi High-Tech Science Corporation). The adsorption amount of iridium element in the silica monolith adsorbent after the first adsorption treatment (second adsorbent) was calculated based on the following formula:

Adsorption amount of iridium element in silica monolith adsorbent after first adsorption treatment = (Total amount of iridium element in solution supplied to the column during period from start of feeding to end of feeding) - (Total amount of iridium element in solution collected in collection container during period from start of feeding to end of feeding)

The adsorption amount of iridium element in the silica monolith adsorbent after the first adsorption treatment was converted into an adsorption amount of iridium element per 1 kg of the silica monolith adsorbent (hereinafter referred to as an "iridium adsorption amount").

The adsorption amount of iridium element in the silica monolith adsorbent after the first adsorption treatment was defined as the saturated adsorption amount of iridium element in the silica monolith adsorbent.

The percentage of the adsorption amount of iridium element in the silica monolith adsorbent after the first adsorption treatment relative to the saturated adsorption amount of iridium element in the silica monolith adsorbent (hereinafter referred to as an "iridium adsorption rate") was determined. The iridium adsorption rate in the first adsorption treatment was 100%.

(2) First desorption treatment (production of third adsorbent)

A desorption treatment was performed on the silica monolith adsorbent after the first adsorption treatment (second adsorbent) using the same flow adsorption apparatus as used in the first adsorption treatment.

At room temperature (25°C), an aqueous ammonium chloride solution (24 mL, ammonium chloride concentration: 5.0 mol/L) was fed to the column at a flow rate of 0.2 mL/min using a feeding pump, and the solution that passed through the column was collected in a collection container.

The total amount of iridium element in the collected solution was measured using an ICP emission spectrometer (PS3520 UVDD manufactured by HITACHI, Ltd.), and this amount was defined as the desorption amount of iridium element in the first desorption treatment.

The percentage of the desorption amount of iridium element in the first desorption treatment relative to the adsorption amount of iridium element in the silica monolith adsorbent after the first adsorption treatment (hereinafter referred to as an "iridium desorption rate") was determined.

(3) First washing treatment

After the first desorption treatment, pure water (10 mL) was fed to the column using a feeding pump to perform a washing treatment.

(4) Second adsorption treatment

In order to confirm that the adsorption capacity had not deteriorated after the desorption treatment, a second adsorption treatment was performed on the silica monolith adsorbent after the first washing treatment (third adsorbent) to determine the iridium adsorption amount and the iridium adsorption rate in the second adsorption treatment in the same manner as the first adsorption treatment. In determining the iridium adsorption amount and the iridium adsorption rate in the second adsorption treatment, the adsorption amount of iridium element in the silica monolith adsorbent after the first adsorption treatment was taken as the saturated adsorption amount of iridium element in the silica monolith adsorbent.

(5) Second desorption treatment

A second desorption treatment was performed on the silica monolith adsorbent after the second adsorption treatment to determine the iridium desorption rate in the second desorption treatment in the same manner as the first desorption treatment.

(6) Second washing treatment

After the second desorption treatment, a second washing treatment was performed in the same manner as the first washing treatment.

(7) Third adsorption treatment

In order to confirm that the adsorption capacity had not deteriorated after the second desorption treatment, a third adsorption treatment was performed on the silica monolith adsorbent after the second washing treatment to determine the iridium adsorption amount and the iridium adsorption rate in the third adsorption treatment in the same manner as the first adsorption treatment. In determining the iridium adsorption amount and the iridium adsorption rate in the third adsorption treatment, the adsorption amount of iridium element in the silica monolith adsorbent after the first adsorption treatment was taken as the saturated adsorption amount of iridium element in the silica monolith adsorbent.

(8) Third desorption treatment

A third desorption treatment was performed on the silica monolith adsorbent after the third adsorption treatment to determine the iridium desorption rate in the third desorption treatment in the same manner as the first desorption treatment.

(9) Third washing treatment

After the third desorption treatment, a third washing treatment was performed in the same manner as the first washing treatment.

The results are shown in Table 2. Due to the influence of measurement errors derived from the apparatus, the iridium desorption rate may exceed 100%. When the iridium desorption rate exceeds 100%, it is expressed as "100". Similarly, in other examples, when the desorption rate exceeds 100%, it is expressed as "100".

[Table 2]

Table 2

| Condition using 5 mol/L ammonium chloride for desorption treatment | | | |
|---|---|---|---|
| Number of treatment cycles | Iridium adsorption amount (g/kg) | Iridium adsorption rate (%) | Iridium desorption rate (%) |
| 1 | 55.8 | 100 | 100 |
| 2 | 51.9 | 93 | 93 |
| 3 | 50.0 | 90 | 97 |

**<Example 2>**

Except that the concentration of ammonium chloride used in the desorption treatment was changed to 3 mol/L, the same procedures as in Example 1 were carried out. The results are shown in Table 3.

[Table 3]

Table 3

| Condition using 3 mol/L ammonium chloride for desorption treatment | | | |
|---|---|---|---|
| Number of treatment cycles | Iridium adsorption amount (g/kg) | Iridium adsorption rate (%) | Iridium desorption rate (%) |
| 1 | 54.4 | 100 | 93 |
| 2 | 36.2 | 67 | 100 |
| 3 | 40.3 | 74 | 100 |

**<Example 3>**

Except that 12 mol/L hydrochloric acid was used instead of ammonium chloride in the desorption treatment, the same procedures as in Example 1 were carried out. The results are shown in Table 4.

[Table 4]

Table 4

| Condition using 12 mol/L hydrochloric acid for desorption treatment | | | |
|---|---|---|---|
| Number of treatment cycles | Iridium adsorption amount (g/kg) | Iridium adsorption rate (%) | Iridium desorption rate (%) |
| 1 | 58.0 | 100 | 92 |
| 2 | 51.0 | 88 | 95 |
| 3 | 49.7 | 86 | 94 |

**<Example 4>**

Except that the silica monolith adsorbent used was changed to that produced in Production Example 1, that the solution fed in the adsorption treatment was changed to a palladium nitrate solution containing 100 ppm of palladium, and that the acidic solution used in the desorption treatment was changed to 12 mol/L hydrochloric acid and fed at 60°C, the same procedures as in Example 1 were carried out. In the same manner as in Example 1, the palladium adsorption amount, palladium adsorption rate, and palladium desorption rate were determined. The results are shown in Table 5. When the palladium adsorption rate exceeded 100%, it was expressed as "100". Similarly, in other examples, when the adsorption rate exceeded 100%, it was expressed as "100". It is presumed that the reason why the adsorption rate exceeded 100% is that the saturated adsorption amount was lower than the theoretical maximum adsorption amount calculated from the amount of functional groups introduced by surface modification.

[Table 5]

Table 5

| Condition using 12 mol/L hydrochloric acid for desorption treatment | | | |
|---|---|---|---|
| Number of treatment cycles | Palladium adsorption amount (g/kg) | Palladium adsorption rate (%) | Palladium desorption rate (%) |
| 1 | 57.2 | 100 | 91 |
| 2 | 62.3 | 100 | 92 |
| 3 | 58.2 | 100 | 93 |

**<Example 5>**

Except that the acidic solution used in the desorption treatment was changed to 6 mol/L hydrochloric acid, the same procedures as in Example 4 were carried out. In the same manner as in Example 4, the palladium adsorption amount, palladium adsorption rate, and palladium desorption rate were determined. The results are shown in Table 6.

[Table 6]

Table 6

| Condition using 6 mol/L hydrochloric acid for desorption treatment | | | |
|---|---|---|---|
| Number of treatment cycles | Palladium adsorption amount (g/kg) | Palladium adsorption rate (%) | Palladium desorption rate (%) |
| 1 | 55.2 | 100 | 80 |
| 2 | 51.5 | 93 | 87 |
| 3 | 51.1 | 93 | 82 |

**<Example 6>**

Except that the acidic solution used in the desorption treatment was changed to 3 mol/L nitric acid, the same procedures as in Example 4 were carried out. In the same manner as in Example 4, the palladium adsorption amount, palladium adsorption rate, and palladium desorption rate were determined. The results are shown in Table 7.

[Table 7]

Table 7

| Condition using 3 mol/L nitric acid for desorption treatment | | | |
|---|---|---|---|
| Number of treatment cycles | Palladium adsorption amount (g/kg) | Palladium adsorption rate (%) | Palladium desorption rate (%) |
| 1 | 52.5 | 100 | 91 |
| 2 | 47.4 | 90 | 98 |
| 3 | 43.8 | 83 | 100 |

**<Example 7>**

Except that the acidic solution used in the desorption treatment was changed to 0.5 mol/L nitric acid, the same procedures as in Example 4 were carried out. In the same manner as in Example 4, the palladium adsorption amount, palladium adsorption rate, and palladium desorption rate were determined. The results are shown in Table 8.

[Table 8]

Table 8

| Condition using 0.5 mol/L nitric acid for desorption treatment | | | |
|---|---|---|---|
| Number of treatment cycles | Palladium adsorption amount (g/kg) | Palladium adsorption rate (%) | Palladium desorption rate (%) |
| 1 | 59.6 | 100 | 82 |

(continued)

| Condition using 0.5 mol/L nitric acid for desorption treatment | | | |
|---|---|---|---|
| Number of treatment cycles | Palladium adsorption amount (g/kg) | Palladium adsorption rate (%) | Palladium desorption rate (%) |
| 2 | 49.1 | 83 | 92 |
| 3 | 53.6 | 90 | 91 |

**<Example 8>**

Except that the temperature of the desorption treatment was changed to 80°C, the same procedures as in Example 4 were carried out. In the same manner as in Example 4, the palladium adsorption amount, palladium adsorption rate, and palladium desorption rate were determined. The results are shown in Table 9.

[Table 9]

Table 9

| Condition using 12 mol/L hydrochloric acid for desorption treatment | | | |
|---|---|---|---|
| Number of treatment cycles | Palladium adsorption amount (g/kg) | Palladium adsorption rate (%) | Palladium desorption rate (%) |
| 1 | 57.6 | 100 | 97 |
| 2 | 72.3 | 100 | 96 |
| 3 | 61.1 | 100 | 95 |

**<Example 9>**

Except that the acidic solution used in the desorption treatment was changed to an aqueous ammonium chloride solution having a concentration of 5 mol/L, and that the temperature of the desorption treatment was set to 25°C, the same procedures as in Example 4 were carried out. In the same manner as in Example 4, the palladium adsorption amount, palladium adsorption rate, and palladium desorption rate were determined. The results are shown in Table 10.

[Table 10]

Table 10

| Condition using 5 mol/L ammonium chloride for desorption treatment | | | |
|---|---|---|---|
| Number of treatment cycles | Palladium adsorption amount (g/kg) | Palladium adsorption rate (%) | Palladium desorption rate (%) |
| 1 | 60.6 | 100 | 71 |
| 2 | 60.9 | 100 | 80 |
| 3 | 49.0 | 81 | 92 |

**<Example 10>**

Except that, instead of using 0.125 g of the silica monolith adsorbent (first adsorbent) obtained in Production Example 2, 0.100 g of the silica monolith adsorbent (first adsorbent) obtained in Production Example 3 was packed into a column (diameter: 4.0 mm, length: 100 mm), that the solution fed in the adsorption treatment was changed to a lead nitrate solution containing 100 ppm of lead and fed at a flow rate of 0.15 mL/min at 25°C, and that the acidic solution used in the

desorption treatment was changed to 1 mol/L nitric acid and fed at a flow rate of 0.15 mL/min at 25°C, the same procedures as in Example 1 were carried out to determine the lead adsorption amount, lead adsorption rate, and lead desorption rate. The results are shown in Table 11. When the lead adsorption rate exceeded 100%, it was expressed as "100". Similarly, in other examples, when the adsorption rate exceeded 100%, it was expressed as "100". It is presumed that the reason why the adsorption rate exceeded 100% is that the saturated adsorption amount was lower than the theoretical maximum adsorption amount calculated from the amount of functional groups introduced by surface modification.

[Table 11]

Table 11

| Condition using 1 mol/L nitric acid for desorption treatment | | | |
|---|---|---|---|
| Number of treatment cycles | Lead adsorption amount (g/kg) | Lead adsorption rate (%) | Lead desorption rate (%) |
| 1 | 70.0 | 100 | 100 |
| 2 | 46.6 | 66.6 | 100 |
| 3 | 44.6 | 63.7 | 100 |

**<Example 11>**

Except that the acidic solution used in the desorption treatment was changed to 6 mol/L hydrochloric acid, the same procedures as in Example 10 were carried out. In the same manner as in Example 10, the lead adsorption amount, lead adsorption rate, and lead desorption rate were determined. The results are shown in Table 12.

[Table 12]

Table 12

| Condition using 6 mol/L hydrochloric acid for desorption treatment | | | |
|---|---|---|---|
| Number of treatment cycles | Lead adsorption amount (g/kg) | Lead adsorption rate (%) | Lead desorption rate (%) |
| 1 | 71.9 | 100 | 97.1 |
| 2 | 48.3 | 67.2 | 97.9 |
| 3 | 44.8 | 62.3 | 99.1 |

**<Comparative Example 1>**

Except that the acidic solution used in the desorption treatment was changed to aqua regia (the volume ratio of concentrated hydrochloric acid to concentrated nitric acid was 3), the same procedures as in Example 1 were carried out. In the same manner as in Example 1, the iridium adsorption amount, iridium adsorption rate, and iridium desorption rate were determined. The results are shown in Table 13. Since the adsorption amount significantly decreased in the second adsorption treatment, the experiment was terminated at this stage.

[Table 13]

Tabler 13

| Condition using aqua regia for desorption treatment | | | |
|---|---|---|---|
| Number of treatment cycles | Iridium adsorption amount (g/kg) | Iridium adsorption rate (%) | Iridium desorption rate (%) |
| 1 | 55.5 | 100 | 100 |
| 2 | 8.5 | 15 | - |

**<Comparative Example 2>**

Except that an ion exchange resin (Amberlite (trademark) IRA904Cl, manufactured by DuPont) was packed into the column instead of the silica monolith adsorbent, the same procedures as in Example 1 were carried out. In the same manner as in Example 1, the iridium adsorption amount, iridium adsorption rate, and iridium desorption rate were determined. The results are shown in Table 14. Since the iridium desorption rate in the first desorption treatment was lower than 70% and the iridium adsorption amount in the second adsorption treatment tended to be lower than those in the Examples, the experiment was terminated at this stage.

[Table 14]

Table 14

| Condition using ion exchange resin for adsorption and desorption treatment | | | |
|---|---|---|---|
| Number of treatment cycles | Iridium adsorption amount (g/kg) | Iridium adsorption rate (%) | Iridium desorption rate (%) |
| 1 | 40.4 | 100 | 32 |
| 2 | 25.5 | 63 | - |

DESCRIPTION OF REFERENCE SIGNS

1 Ceramic skeleton
2 Macropores
3 Mesopores
60 Flow adsorption apparatus
61 Column
62 Tubing
63 Feeding pump
64 Collection container

**Claims**

**1.** A method for producing an adsorbent, comprising the following steps of:

(1A) preparing a second adsorbent obtained by performing a contact treatment of a first adsorbent with a liquid containing a target substance,

wherein the first adsorbent has a co-continuous structure formed of: a ceramic skeleton comprising mesopores; and macropores,
wherein a surface of the ceramic skeleton is modified with a functional group capable of adsorbing the target substance, and
wherein the target substance is selected from the group consisting of metals, metal ions, metalloids, and metalloid ions; and

(2A) desorbing the target substance from the second adsorbent by performing a contact treatment of the second adsorbent with an acidic solution excluding aqua regia, thereby obtaining a third adsorbent,

wherein a percentage of an adsorption amount of the target substance in the second adsorbent prepared in step (1A) relative to a saturated adsorption amount of the target substance in the first adsorbent is 50% or more, and
wherein a percentage of a desorption amount of the target substance in step (2A) relative to the adsorption amount of the target substance in the second adsorbent prepared in step (1A) is 70% or more.

**2.** The method according to claim 1, wherein the contact treatment in step (2A) is performed at a temperature of 90°C or lower.

**3.** The method according to claim 1 or 2, wherein the acidic solution comprises at least one selected from the group consisting of an inorganic acid and an ammonium salt.

**4.** The method according to claim 1 or 2, wherein a total concentration of an inorganic acid and an ammonium salt contained in the acidic solution is 0.1 mol/L or more and 13 mol/L or less.

**5.** The method according to claim 1 or 2, wherein the acidic solution comprises at least one selected from the group consisting of hydrochloric acid, nitric acid, and ammonium chloride.

**6.** The method according to claim 1 or 2, wherein the functional group comprises at least one selected from the group consisting of a primary amino group, a secondary amino group, a tertiary amino group, a quaternary ammonium group, an imino group, a nitrilo group, a nitrogen-containing heterocyclic group, a thiol group, a sulfo group, a phosphonic acid group, and a carboxyl group.

**7.** The method according to claim 1 or 2, wherein the ceramic skeleton comprises at least one selected from the group consisting of silicon, aluminum, tin, cerium, titanium, and zirconium.

**8.** The method according to claim 1 or 2, wherein the target substance is selected from the group consisting of transition metals comprising rare-earth metals; metals and metalloids of Groups 13 to 16; transition metal ions comprising rare-earth metal ions; and metal ions and metalloid ions of Groups 13 to 16.

**9.** A method for recovering a target substance, comprising the following steps of:

(1B) preparing a second adsorbent obtained by performing a contact treatment of a first adsorbent with a liquid containing the target substance,

wherein the first adsorbent has a co-continuous structure formed of: a ceramic skeleton comprising mesopores; and macropores,
wherein a surface of the ceramic skeleton is modified with a functional group capable of adsorbing the target substance, and
wherein the target substance is selected from the group consisting of metals, metal ions, metalloids, and metalloid ions; and

(2B) desorbing the target substance from the second adsorbent by performing a contact treatment of the second adsorbent with an acidic solution excluding aqua regia, thereby obtaining the target substance,

wherein a percentage of an adsorption amount of the target substance in the second adsorbent prepared in step (1B) relative to a saturated adsorption amount of the target substance in the first adsorbent is 50% or more, and
wherein a percentage of a desorption amount of the target substance in step (2B) relative to the adsorption amount of the target substance in the second adsorbent prepared in step (1B) is 70% or more.

3
1
3
2
1
2
3
2
1
3
1
3
1
3
3
3
1
2
2
1
1
3
1
3
2
3
2
3
1
1
3
3
2
3
1
3
2

[FIG. 1]

60
62
61
64
63
62
62

[FIG. 2]

## INTERNATIONAL SEARCH REPORT

International application No. **PCT/JP2024/038801**

**A. CLASSIFICATION OF SUBJECT MATTER**

***B01J 20/02***(2006.01)i; ***B01D 15/00***(2006.01)i; ***B01J 20/30***(2006.01)i; ***B01J 20/34***(2006.01)i; ***C01B 33/18***(2006.01)i
FI: B01J20/02 A; B01J20/34 G; C01B33/18 E; B01D15/00 N; C01B33/18 C; B01J20/30

According to International Patent Classification (IPC) or to both national classification and IPC

**B. FIELDS SEARCHED**

Minimum documentation searched (classification system followed by classification symbols)

B01J20/00-20/34; B01D15/00-15/42; C01B33/00-33/46; C22B1/00-61/00; C02F1/28

Documentation searched other than minimum documentation to the extent that such documents are included in the fields searched

Published examined utility model applications of Japan 1922-1996
Published unexamined utility model applications of Japan 1971-2025
Registered utility model specifications of Japan 1996-2025
Published registered utility model applications of Japan 1994-2025

Electronic data base consulted during the international search (name of data base and, where practicable, search terms used)

JSTPlus/JMEDPlus/JST7580 (JDreamIII)

**C. DOCUMENTS CONSIDERED TO BE RELEVANT**

| Category* | Citation of document, with indication, where appropriate, of the relevant passages | Relevant to claim No. |
|---|---|---|
| X | WO 2022/163833 A1 (MITSUI MINING & SMELTING CO., LTD.) 04 August 2022 (2022-08-04)<br>claims 1-10, paragraphs [0138]-[0237] | 1-9 |
| X | WO 2023/190445 A1 (MITSUI MINING & SMELTING CO., LTD.) 05 October 2023 (2023-10-05)<br>claims 1-10, paragraphs [0143]-[0216] | 1-9 |
| A | JP 2021-103761 A (SCREEN HOLDINGS CO., LTD.) 15 July 2021 (2021-07-15) | 1-9 |
| A | WO 2017/002871 A1 (SNG INC.) 05 January 2017 (2017-01-05) | 1-9 |

☐ Further documents are listed in the continuation of Box C.

☑ See patent family annex.

* Special categories of cited documents:

"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **10 January 2025** | **28 January 2025** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/038801**

| Patent document cited in search report | Publication date (day/month/year) | Patent family member(s) | Publication date (day/month/year) |
|---|---|---|---|
| WO 2022/163833 A1 | 04 August 2022 | US 2024/0165582 A1 claims 1-10, paragraphs [0162]-[0261] | |
| | | US 2024/0082812 A1 | |
| | | US 2024/0157330 A1 | |
| | | WO 2022/163832 A1 | |
| | | WO 2022/163834 A1 | |
| | | EP 4286331 A1 | |
| | | EP 4286332 A1 | |
| | | EP 4286333 A1 | |
| | | CN 116761782 A | |
| | | KR 10-2023-0137904 A | |
| | | CN 116806208 A | |
| | | KR 10-2023-0132794 A | |
| | | KR 10-2023-0135080 A | |
| | | CN 116963998 A | |
| WO 2023/190445 A1 | 05 October 2023 | (Family: none) | |
| JP 2021-103761 A | 15 July 2021 | WO 2021/131292 A1 | |
| WO 2017/002871 A1 | 05 January 2017 | US 2018/0185821 A1 | |
| | | US 2022/0072510 A1 | |
| | | EP 3318322 A1 | |
| | | CN 107708851 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 3158426 A
- JP 2016011456 A
- WO 2017002871 A
- WO 2022163834 A


### Non-patent literature cited in the description


- *RSC Adv.*, 2017, vol. 7, 56559-56565
- **BARRETT-JOYNER-HALENDA**. *J. Amer. Chem. Soc.*, 1951, vol. 73, 373